# EUROPEAN PATENT APPLICATION

(11) **EP 4 358 588 A1**
(43) Date of publication of application: **24.04.2024**
(21) Application number: 22851993.0
(22) Date of filing: 27.07.2022
(51) Int. Cl.: H04W 36/08, H04W 36/00, H04W 48/02

(54) **TRANSMISSION METHOD FOR PERIODIC SERVICE AND COMMUNICATION APPARATUS**

(30) Priority: 31.07.2021 CN 202110876659
(71) Applicant: Huawei Technologies Co., Ltd., Shenzhen, Guangdong 518129 (CN)
(72) Inventor: PAN, Qi, Shenzhen, Guangdong 518129 (CN); HUANG, Zhenglei, Shenzhen, Guangdong 518129 (CN); NI, Hui, Shenzhen, Guangdong 518129 (CN)
(74) Representative: Pfenning, Meinig & Partner mbB
(86) International application number: PCT/CN2022/108177
(87) International publication number: WO 2023/011279

(57) **Abstract**

This application provides a periodic service transmission method and a communication apparatus. The method includes: A source access network device receives first data and a first identifier. The first identifier indicates a last data packet of the first data, and the first data is data in a first periodicity of a periodic service. The source access network device sends a handover command to a terminal device in a first time period. A start moment of the first time period is a moment at which the last data packet is sent to the terminal device, an end moment of the first time period is an end moment of the first periodicity, and the handover command instructs the terminal device to perform a handover to a target access network device. According to the solution of this application, the handover of the terminal device may be performed in a time period in which the source access network device completes sending of the first data in the first periodicity, that is, the first time period. This avoids interruption of sending the first data by the source access network device due to the handover, and improves transmission reliability of the periodic service.

## Description

This application claims priority to Chinese Patent Application No. 202110876659.3, filed with the China National Intellectual Property Administration on July 31, 2021 and entitled "PERIODIC SERVICE TRANSMISSION METHOD AND COMMUNICATION APPARATUS", which is incorporated herein by reference in its entirety.

### TECHNICAL FIELD

This application relates to the communication field, and more specifically, to a periodic service transmission method and a communication apparatus.

### BACKGROUND

The rapid development of the new media industry brings new requirements on communication technologies. The surging data volume in the media industry poses unprecedented challenges to network transmission capabilities, especially the emergence of new media streams such as ultra high-definition videos, virtual reality (virtual reality, VR) panoramic videos, augmented reality (augmented reality, AR) videos, and mixed reality (mixed reality, MR) videos. 5G technologies can implement real-time high definition rendering in the media industry and greatly reduce the requirements of devices on local computing capabilities. In this way, a large amount of data can be transmitted in real time, and a network latency can be reduced. This not only meets the requirements of ultra high-definition video live broadcast, but also enables applications that have high requirements on image quality and a latency to grow with great strides.

Currently, to ensure a low interaction latency, an existing media service usually uses the real-time transport protocol (real-time transport protocol, RTP), the real-time transport control protocol (real-time transport control protocol, RTCP), the real-time streaming protocol (real-time streaming protocol, RTSP), and the like based on the user datagram protocol (user datagram protocol, UDP). In this way, a periodic feature of a media encoder is presented in a transmission process. In other words, a periodic characteristic is presented in data transmission of a real-time service (including VR, AR, MR, and the like).

When a terminal device performs a mobility handover in a transmission process of the periodic service, the terminal device needs to be disconnected from a source access network device and reconnected to a target access network device. In addition, a user plane change and establishment of a forwarding tunnel may occur on a core network side. Consequently, problems such as data transmission interruption and/or disorder of the periodic service may be caused, and an extra latency may be caused for a real-time service, affecting user experience. During the foregoing mobility handover of the terminal device, how to improve transmission reliability of the periodic service in the handover process is an urgent problem to be resolved.

### SUMMARY

This application provides a periodic service transmission method and a communication apparatus, to improve transmission reliability of a periodic service in a handover process by determining an appropriate handover moment.

According to a first aspect, a periodic service transmission method is provided. The method is performed by a source access network device, or may be performed by a module or a unit included in a source access network device. The method includes: receiving first data and a first identifier, where the first identifier indicates a last data packet of the first data, and the first data is data in a first periodicity of a periodic service; and sending a handover command to a terminal device in a first time period, where a start moment of the first time period is a moment at which the last data packet is sent, an end moment of the first time period is an end moment of the first periodicity, and the handover command instructs the terminal device to perform a handover to a target access network device.

According to the solution in this embodiment of this application, when the terminal device needs to perform a handover from the source access network device to the target access network device, the source access network device may send, based on the first identifier, the handover command to the terminal device at any moment of the first time period. The start moment of the first time period is a moment at which the last data packet is sent to the terminal device, and the end moment of the first time period is the end moment of the first periodicity. In other words, according to the solution of this application, the handover of the terminal device may be performed in a time period in which the source access network device completes sending of the first data in the first periodicity, that is, the first time period. This avoids interruption of sending the first data by the source access network device due to the handover, and improves transmission reliability of the periodic service.

Further, this can avoid interruption of receiving the first data by the terminal device due to the handover, to improve user experience.

With reference to the first aspect, in some implementations of the first aspect, the method further includes: determining the start moment of the first time period based on the first identifier.

With reference to the first aspect, in some implementations of the first aspect, the method further includes: obtaining duration of the first periodicity; and determining the end moment of the first periodicity based on the duration of the first periodicity.

With reference to the first aspect, in some implementations of the first aspect, the receiving a first identifier includes: receiving the first identifier from a user plane function network element by using a general packet radio service tunneling protocol GTP layer.

Specifically, the first identifier may be received by using a GTP user plane (GTP-user, GTP-U) protocol layer. In this application, the protocol layer is referred to as a GTP layer for short.

With reference to the first aspect, in some implementations of the first aspect, the method further includes: receiving first indication information. The first indication information indicates the source access network device to send the handover command to the terminal device in the first time period, indicates the source access network device to determine the start moment of the first time period based on the first identifier, or indicates that the first data is data of the periodic service.

With reference to the first aspect, in some implementations of the first aspect, the first indication information includes the duration of the first periodicity.

With reference to the first aspect, in some implementations of the first aspect, the method further includes: sending the first indication information to the target access network device.

In other words, the source access network device may indicate the target access network device to perform optimization processing during a next handover. In this manner, information exchange between an access network device and a core network device can be reduced, and communication overheads can be reduced.

With reference to the first aspect, in some implementations of the first aspect, the method further includes: sending the last data packet to the terminal device.

According to a second aspect, a periodic service transmission method is provided. The method is performed by a source access network device, or may be performed by a module or a unit included in a source access network device. The method includes: receiving first data and first information from a terminal device, where the first information is used to determine transmission duration of the first data, and the first data is data in a first periodicity of a periodic service; and sending a handover command to the terminal device in a second time period. The second time period is determined based on a receiving moment of the 1^{st} data packet of the first data, the transmission duration, and duration of the first periodicity, and the handover command instructs the terminal device to perform a handover to a target access network device.

According to the solution in this embodiment of this application, when the terminal device needs to perform a handover from the source access network device to the target access network device, the source access network device may send, based on the first information, the handover command to the terminal device at any moment of the second time period. A start moment and an end moment of the second time period are determined based on the receiving moment of the 1^{st} data packet of the first data, the transmission duration, and the duration of the first periodicity. In other words, according to the solution of this application, a handover of the terminal device may be performed in a time period in which the terminal device completes sending of the first data in the first periodicity, that is, the second time period. This avoids interruption of sending the first data by the terminal device due to the handover, and improves transmission reliability of a periodic service.

With reference to the second aspect, in some implementations of the second aspect, the method further includes: determining the start moment of the second time period based on the receiving moment of the 1^{st} data packet of the first data and the transmission duration.

With reference to the second aspect, in some implementations of the second aspect, the method further includes: obtaining the duration of the first periodicity; and determining the end moment of the second time period based on the receiving moment of the 1^{st} data packet and the duration of the first periodicity.

With reference to the second aspect, in some implementations of the second aspect, the method further includes: receiving second indication information. The second indication information indicates the source access network device to send the handover command to the terminal device in the second time period, indicates the source access network device to determine the start moment of the second time period, or indicates that the first data is data of the periodic service.

With reference to the second aspect, in some implementations of the second aspect, the second indication information includes the duration of the first periodicity.

With reference to the second aspect, in some implementations of the second aspect, the receiving first information from a terminal device includes: receiving the first information from the terminal device by using a packet data convergence protocol PDCP layer or a service data adaptation protocol SDAP layer.

According to a third aspect, a periodic service transmission method is provided. The method is performed by a terminal device, or may be performed by a module or a unit included in a terminal device. The method includes: sending first data and first information to a source access network device, where the first information is used to determine transmission duration of the first data, the transmission duration of the first data is used to determine a sending moment of a handover command, the handover command instructs the terminal device to perform a handover to a target access network device, and the first data is data in a first periodicity of a periodic service; receiving a handover command from the source access network device; and performing a handover to the target access network device according to the handover command.

According to the solution in this embodiment of this application, when the terminal device needs to perform a handover from the source access network device to the target access network device, the source access network device may send, based on the first information, the handover command to the terminal device at any moment of a second time period. A start moment and an end moment of the second time period are determined based on a receiving moment of the 1^{st} data packet of the first data, the transmission duration, and duration of the first periodicity. In other words, according to the solution of this application, a handover of the terminal device may be performed in a time period in which the terminal device completes sending of the first data in the first periodicity, that is, the second time period. This avoids interruption of sending the first data by the terminal device due to the handover, and improves transmission reliability of a periodic service.

According to a fourth aspect, a periodic service transmission method is provided. The method is performed by a terminal device, or may be performed by a module or a unit included in a terminal device. The method includes: sending first data to a source access network device, where the first data is data in a first periodicity of a periodic service; and performing a handover to a target access network device in a third time period, where the third time period is determined based on a sending moment of a last data packet of the first data and duration of the first periodicity.

According to the solution in this embodiment of this application, when the terminal device needs to perform a handover from the source access network device to the target access network device, the terminal device may perform a handover to the target access network device at any moment of the third time period. A start moment of the third time period is a moment at which the terminal device completes sending of the last data packet, and an end moment of the third time period is an end moment of the first periodicity. In other words, according to the solution of this application, a handover of the terminal device may be performed in a time period in which the terminal device completes sending of the first data in the first periodicity, that is, the third time period. This avoids interruption of sending the first data by the terminal device due to the handover, and improves transmission reliability of a periodic service.

With reference to the fourth aspect, in some implementation of the fourth aspect, the method further includes: determining the start moment of the third time period based on the sending moment of the last data packet; and determining the end moment of the third time period based on the duration of the first periodicity.

With reference to the fourth aspect, in some implementations of the fourth aspect, the method further includes: receiving third indication information. The third indication information indicates the terminal device to perform a handover to the target access network device in the third time period, indicates the terminal device to determine the start moment of the third time period, or indicates that the first data is data of the periodic service.

With reference to the fourth aspect, in some implementations of the fourth aspect, the third indication information includes the duration of the first periodicity.

With reference to the fourth aspect, in some implementations of the fourth aspect, the method further includes: determining, based on a type of second data, whether to send the second data. The type of the second data includes one or more of the following: a frame type, a fragment type, a bit rate type, and a viewing angle type. The second data is data in a second periodicity of the periodic service.

With reference to the fourth aspect, in some implementations of the fourth aspect, the method further includes: receiving a handover command from the source access network device. The handover command instructs the terminal device to perform a handover to the target access network device.

According to a fifth aspect, a periodic service transmission method is provided. The method is performed by a target access network device, or may be performed by a module or a unit included in a target access network device. The method includes: receiving second data from a source access network device and/or third data from a user plane function network element, where the second data is data in a second periodicity of a periodic service, and the third data is data in a third periodicity of the periodic service; and determining a send priority of the second data and/or a send priority of the third data. The determining a send priority of the second data and/or a send priority of the third data includes at least one of the following: determining, based on a data type of the second data, whether to send the second data, determining whether to perform accelerated processing on the second data, determining a sending time sequence of the second data based on a second identifier, determining, based on a data type of the third data, whether to send the third data, determining whether to perform the accelerated processing on the third data, determining a sending time sequence of the third data based on a third identifier, and determining a sending time sequence of the second data and the third data. The second identifier indicates a sequence number of the second data in the periodic service, and the type of the second data includes one or more of the following: a frame type, a fragment type, a bit rate type, and a viewing angle type. The type of the second data indicates transmission importance of the second data or indicates a level of criticality of user experience at a service layer corresponding to the second data. The third identifier indicates a sequence number of the third data in the periodic service, and the type of the third data includes one or more of the following: the frame type, the fragment type, the bit rate type, and the viewing angle type. The type of the third data indicates transmission importance of the third data or indicates a level of criticality of user experience at a service layer corresponding to the third data.

According to the solution in this embodiment of this application, the target access network device may perform optimization processing on the received second data and/or third data, and send the processed second data to the terminal device. In this manner, a phenomenon such as frame freezing that may be caused by disorder can be avoided, and user experience can be improved.

With reference to the fifth aspect, in some implementations of the fifth aspect, the method further includes: receiving fourth indication information. The fourth indication information indicates the target access network device to perform one or more of the following: determining, based on the data type of the second data, whether to send the second data, determining whether to perform the accelerated processing on the second data, determining the sending time sequence of the second data based on the second identifier, determining, based on the data type of the third data, whether to send the third data, determining whether to perform the accelerated processing on the third data, determining the sending time sequence of the third data based on the third identifier, and determining the sending time sequence of the second data and the third data.

With reference to the fifth aspect, in some implementations of the fifth aspect, the method further includes: processing the second data and/or the third data based on the determined send priority. The processing the second data and/or the third data includes sending or skipping sending the second data and/or the third data based on a determined result.

With reference to the fifth aspect, in some implementations of the fifth aspect, the method further includes: receiving a second identifier from the source access network device and/or receiving a third identifier from the user plane function network element.

According to a sixth aspect, a periodic service transmission method is provided. The method is performed by a user plane function network element, or may be performed by a module or a unit included in a user plane function network element. The method includes: receiving seventh indication information from a target access network device, where the seventh indication information indicates a terminal device to perform a handover to the target access network device; and sending a fourth identifier to a source access network device in a fourth time period. The fourth identifier indicates that second data is a last piece of data sent by the user plane function network element to the source access network device, the second data is data in a second periodicity of a periodic service, a start moment of the fourth time period is a moment at which the user plane function network element sends a last data packet of the second data, and an end moment of the fourth time period is an end moment of the second periodicity.

According to the solution in this embodiment of this application, when the terminal device needs to perform a handover from the source access network device to the target access network device, the user plane function network element may send the fourth identifier to the source access network device at any moment of the fourth time period. The start moment of the fourth time period is a moment at which the user plane function network element sends the last data packet, and the end moment of the fourth time period is the end moment of the second periodicity. The fourth identifier indicates that the second data is the last piece of data sent by the user plane function network element to the source access network device. In other words, according to the solution of this application, the fourth identifier of the user plane function network element may be sent in a time period in which sending of the second data is completed in the second periodicity, that is, the fourth time period. This avoids interruption of sending the second data by the user plane function network element due to the handover, and improves transmission reliability of the periodic service.

With reference to the sixth aspect, in some implementations of the sixth aspect, the method further includes: determining the start moment of the fourth time period based on a moment at which the last data packet is sent.

With reference to the sixth aspect, in some implementations of the sixth aspect, the method further includes: obtaining duration of the second periodicity; and determining the end moment of the fourth time period based on the duration of the second periodicity.

With reference to the sixth aspect, in some implementations of the sixth aspect, the method further includes: receiving fifth indication information from a core network device. The fifth indication information indicates the user plane function network element to send a first identifier, the first identifier indicates a last data packet of first data, and the first data is data in a first periodicity of the periodic service.

According to a seventh aspect, a communication apparatus is provided. The apparatus may be a source access network device. The apparatus includes: a transceiver unit, configured to: receive first data and a first identifier, where the first identifier indicates a last data packet of the first data, and the first data is data in a first periodicity of a periodic service; and send a handover command to a terminal device in a first time period. A start moment of the first time period is a moment at which the last data packet is sent to the terminal device, an end moment of the first time period is an end moment of the first periodicity, and the handover command instructs the terminal device to perform a handover to a target access network device.

According to the solution in this embodiment of this application, when the terminal device needs to perform a handover from the source access network device to the target access network device, the source access network device may determine, based on the first identifier, the last data packet of the first data of the periodic service, to further determine the moment at which the last data packet is sent to the terminal device. The source access network device may determine the first time period. The start moment of the first time period is the moment at which the last data packet is sent to the terminal device, and the end moment of the first time period is the end moment of the first periodicity. The source access network device may send the handover command to the terminal device at any moment of the first time period. In other words, according to the solution of this application, a handover of the terminal device may be performed in a time period in which sending of the first data is completed in the first periodicity. This avoids an interruption problem of receiving the first data by the terminal device in a handover process, improves transmission reliability of the periodic service, and improves user experience.

With reference to the seventh aspect, in some implementations of the seventh aspect, the apparatus further includes a processing unit, configured to determine the start moment of the first time period based on the first identifier.

With reference to the seventh aspect, in some implementations of the seventh aspect, the transceiver unit is further configured to obtain duration of the first periodicity; and the processing unit is further configured to determine the end moment of the first periodicity based on the duration of the first periodicity.

With reference to the seventh aspect, in some implementations of the seventh aspect, the transceiver unit is specifically configured to receive the first identifier from a user plane function network element by using a general packet radio service tunneling protocol GTP layer.

With reference to the seventh aspect, in some implementations of the seventh aspect, the transceiver unit is further configured to receive first indication information. The first indication information indicates the source access network device to send the handover command to the terminal device in the first time period, indicates the source access network device to determine the start moment of the first time period based on the first identifier, or indicates that the first data is data of the periodic service.

With reference to the seventh aspect, in some implementations of the seventh aspect, the first indication information includes the duration of the first periodicity.

With reference to the seventh aspect, in some implementations of the seventh aspect, the transceiver unit is further configured to send the first indication information to the target access network device.

With reference to the seventh aspect, in some implementations of the seventh aspect, the transceiver unit is further configured to send the last data packet to the terminal device.

According to an eighth aspect, a communication apparatus is provided. The apparatus may be a source access network device. The apparatus includes: a transceiver unit, configured to receive first data and first information from a terminal device. The first information is used to determine transmission duration of the first data, and the first data is data in a first periodicity of a periodic service. The transceiver unit is further configured to send a handover command to the terminal device in a second time period. The second time period is determined based on a receiving moment of the 1^{st} data packet of the first data, the transmission duration, and duration of the first periodicity, and the handover command instructs the terminal device to perform a handover to a target access network device.

According to the solution in this embodiment of this application, when the terminal device needs to perform a handover from the source access network device to the target access network device, the source access network device may determine, based on the first information, a moment at which receiving of the first data of the periodic service is completed, to further determine the second time period. A start moment of the second time period is a moment obtained through subtracting twice the communication latency from a moment at which receiving of the first data by the source access network device is completed. An end moment of the second time period is a moment obtained through subtracting twice the communication latency from an end moment of the first periodicity on a source access network device side. The source access network device may send the handover command to the terminal device at any moment of the second time period. To be specific, it is ensured that time at which the handover command sent by the source access network device arrives at a terminal side is time at which the terminal device completes sending of the first data. In other words, according to the solution of this application, a handover of the terminal device may be performed in a time period in which the sending of the first data is completed in the first periodicity. This avoids an interruption problem of sending the first data by the terminal device in a handover process, and improves transmission reliability of the periodic service.

With reference to the eighth aspect, in some implementations of the eighth aspect, the apparatus further includes a processing unit, configured to determine the start moment of the second time period based on the receiving moment of the 1^{st} data packet of the first data and the transmission duration.

With reference to the eighth aspect, in some implementations of the eighth aspect, the transceiver unit is further configured to obtain the duration of the first periodicity; and the processing unit is further configured to determine the end moment of the second time period based on the receiving moment of the 1^{st} data packet and the duration of the first periodicity.

With reference to the eighth aspect, in some implementations of the eighth aspect, the transceiver unit is further configured to receive second indication information. The second indication information indicates the source access network device to send the handover command to the terminal device in the second time period, indicates the source access network device to determine the start moment of the second time period, or indicates that the first data is data of the periodic service.

With reference to the eighth aspect, in some implementations of the eighth aspect, the second indication information includes the duration of the first periodicity.

With reference to the eighth aspect, in some implementations of the eighth aspect, the transceiver unit is specifically configured to receive the first information from the terminal device by using a packet data convergence protocol PDCP layer or a service data adaptation protocol SDAP layer.

According to a ninth aspect, a communication apparatus is provided. The apparatus may be a terminal device. The apparatus includes: a transceiver unit, configured to send first data and first information to a source access network device. The first information is used to determine transmission duration of the first data, the transmission duration of the first data is used to determine a sending moment of a handover command, the handover command instructs the terminal device to perform a handover to a target access network device, and the first data is data in a first periodicity of a periodic service. The transceiver unit is further configured to receive a handover command from the source access network device. The processing unit is configured to perform a handover to the target access network device according to the handover command.

According to the solution in this embodiment of this application, when the terminal device needs to perform a handover from the source access network device to the target access network device, the source access network device may determine, based on the first information, a moment at which receiving of the first data of the periodic service is completed, to further determine a second time period. A start moment of the second time period is a moment obtained through subtracting twice the communication latency from a moment at which receiving of the first data by the source access network device is completed. An end moment of the second time period is a moment obtained through subtracting twice the communication latency from an end moment of the first periodicity on a source access network device side. The source access network device may send the handover command to the terminal device at any moment of the second time period. To be specific, it is ensured that time at which the handover command sent by the source access network device arrives at a terminal side is time at which the terminal device completes sending of the first data. In other words, according to the solution of this application, a handover of the terminal device may be performed in a time period in which the sending of the first data is completed in the first periodicity. This avoids an interruption problem of sending the first data by the terminal device in a handover process, and improves transmission reliability of the periodic service.

According to a tenth aspect, a communication apparatus is provided. The apparatus may be a terminal device. The apparatus includes: a transceiver unit, configured to send first data to a source access network device, where the first data is data in a first periodicity of a periodic service; and a processing unit, configured to perform a handover to a target access network device in a third time period. The third time period is determined based on a sending moment of a last data packet of the first data and duration of the first periodicity.

According to the solution in this embodiment of this application, when the terminal device needs to perform a handover from the source access network device to the target access network device, the terminal device may determine the third time period based on the sending moment of the last data packet of the first data and the duration of the first periodicity. A start moment of the third time period is a moment at which the terminal device completes sending of the last data packet, and an end moment of the third time period is an end moment of the first periodicity. The terminal device may perform a handover to the target access network device in the third time period. In other words, according to the solution of this application, a handover of the terminal device may be performed in a time period in which sending of the first data is completed in the first periodicity. This avoids an interruption problem of sending the first data by the terminal device in a handover process, and improves transmission reliability of the periodic service.

With reference to the tenth aspect, in some implementations of the tenth aspect, the processing unit is further configured to: determine the start moment of the third time period based on the sending moment of the last data packet; and determine the end moment of the third time period based on the duration of the first periodicity.

With reference to the tenth aspect, in some implementations of the tenth aspect, the transceiver unit is further configured to receive third indication information. The third indication information indicates the terminal device to perform a handover to the target access network device in the third time period, indicates the terminal device to determine the start moment of the third time period, or indicates that the first data is data of the periodic service.

With reference to the tenth aspect, in some implementations of the tenth aspect, the third indication information includes the duration of the first periodicity.

With reference to the tenth aspect, in some implementations of the tenth aspect, the processing unit is further configured to determine, based on a type of second data, whether to send the second data. The type of the second data includes one or more of the following: a frame type, a fragment type, a bit rate type, and a viewing angle type. The second data is data in a second periodicity of the periodic service.

With reference to the tenth aspect, in some implementations of the tenth aspect, the transceiver unit is further configured to receive a handover command from the source access network device. The handover command instructs the terminal device to perform a handover to the target access network device.

According to an eleventh aspect, a communication apparatus is provided. The apparatus may be a target access network device. The apparatus includes: a transceiver unit, configured to receive second data from a source access network device, where the second data is data in a second periodicity of a periodic service; and the transceiver unit is further configured to receive fourth indication information, where the fourth information indicates the target access network device to perform one or more of the following: determining a send priority of the second data based on a data type of the second data, determining, based on the data type of the second data, whether to send the second data; and determining a sending moment of the second data based on the second data and a second identifier; and a processing unit, configured to send the second data to a terminal device based on the fourth indication information. The second identifier indicates a sequence number of the second data in the periodic service, and the type of the second data includes one or more of the following: a frame type, a fragment type, a bit rate type, and a viewing angle type.

According to the solution in this embodiment of this application, the target access network device may perform optimization processing on the received second data, including but not limited to one or more of determining the send priority of the second data, determining whether to send the data, determining the sending moment of the second data, and performing accelerated processing on at least one piece of second data, and the target access network device sends the processed second data to the terminal device. In this manner, the terminal device can receive the second data based on a periodicity in which the second data is located, so that a phenomenon such as frame freezing that may be caused by disorder can be avoided, and user experience can be improved.

With reference to the eleventh aspect, in some implementations of the eleventh aspect, the transceiver unit is further configured to receive a second identifier from the source access network device.

According to a twelfth aspect, a communication apparatus is provided. The apparatus may be a user plane function network element. The apparatus includes a transceiver unit, configured to receive seventh indication information from a target access network device. The seventh indication information indicates a terminal device to perform a handover to the target access network device. The transceiver unit is further configured to send a fourth identifier to a source access network device in a fourth time period. The fourth identifier indicates that second data is a last piece of data sent by the user plane function network element to the source access network device, the second data is data in a second periodicity of a periodic service, a start moment of the fourth time period is a moment at which a last data packet of the second data is sent, and an end moment of the fourth time period is an end moment of the second periodicity.

According to the solution in this embodiment of this application, when the terminal device needs to perform a handover from the source access network device to the target access network device, the user plane function network element may determine the fourth time period based on the sending moment of the last data packet of the second data and duration of the second periodicity. The start moment of the fourth time period is a moment at which the user plane function network element sends the last data packet, and the end moment of the fourth time period is the end moment of the second periodicity. The user plane function network element may send the fourth identifier to the source access network device in the fourth time period, and the fourth identifier indicates that the second data is the last piece of data sent by the user plane function network element to the source access network device. In other words, according to the solution of this application, the fourth identifier of the user plane function network element may be sent in a time period in which sending of the second data is completed in the second periodicity. This avoids an interruption problem of sending the second data by the user plane function network element in a handover process, and improves transmission reliability of the periodic service.

With reference to the twelfth aspect, in some implementations of the twelfth aspect, the processing unit is further configured to determine the start moment of the fourth time period based on the moment at which the last data packet is sent.

With reference to the twelfth aspect, in some implementations of the twelfth aspect, the transceiver unit is further configured to obtain the duration of the second periodicity. The processing unit is further configured to determine the end moment of the fourth time period based on the duration of the second periodicity.

With reference to the twelfth aspect, in some implementations of the twelfth aspect, the transceiver unit is further configured to receive fifth indication information from a core network device. The fifth indication information indicates the user plane function network element to send a first identifier, the first identifier indicates a last data packet of first data, and the first data is data in a first periodicity of the periodic service.

According to a thirteenth aspect, a communication apparatus is provided. The apparatus includes at least one processor. The at least one processor is coupled to at least one memory, and the at least one processor is configured to execute a computer program or instructions stored in the at least one memory, to enable the communication apparatus to perform the method in any one of the first aspect to the sixth aspect or any one of the possible implementations of the first method to the sixth aspect.

According to a fourteenth aspect, a computer-readable storage medium is provided. The computer-readable storage medium stores a computer program or instructions. When the computer program or the instructions are run on a computer, the computer is enabled to perform the method in any one of the first aspect to the sixth aspect or any one of the possible implementations of the first aspect to the sixth aspect.

According to a fifteenth aspect, a chip system is provided. The chip system includes a processor. The processor is configured to execute a computer program or instructions in a memory, to implement the method in any one of the first aspect to the sixth aspect or any one of the possible implementations of the first aspect to the sixth aspect.

According to a sixteenth aspect, a computer program product is provided. The computer program product includes a computer program or instructions. When the computer program or the instructions are run, the method in any one of the first aspect to the sixth aspect or any one of the possible implementations of the first aspect to the sixth aspect is performed.

According to a seventeenth aspect, a communication system is provided. The system includes: the unit in any one of the seventh aspect or the possible implementations of the seventh aspect, the unit in any one of the eleventh aspect or the possible implementations of the eleventh aspect, and/or the unit in any one of the twelfth aspect or the possible implementations of the twelfth aspect.

### BRIEF DESCRIPTION OF DRAWINGS

FIG. 1 is a schematic diagram of a network architecture applicable to a method according to an embodiment of this application;
FIG. 2 is a schematic diagram of a transmission process of a periodic service according to this application;
FIG. 3 is a schematic flowchart of a periodic service transmission method according to an embodiment of this application;
FIG. 4 is another schematic flowchart of a periodic service transmission method according to an embodiment of this application;
FIG. 5 is another schematic flowchart of a periodic service transmission method according to an embodiment of this application;
FIG. 6 is another schematic flowchart of a periodic service transmission method according to an embodiment of this application;
FIG. 7 is another schematic flowchart of a periodic service transmission method according to an embodiment of this application;
FIG. 8 is another schematic flowchart of a periodic service transmission method according to an embodiment of this application;
FIG. 9 is a schematic diagram of a transmission process of data #1 according to this application;
FIG. 10 is another schematic flowchart of a periodic service transmission method according to an embodiment of this application;
FIG. 11 is another schematic flowchart of a periodic service transmission method according to an embodiment of this application;
FIG. 12 is a schematic flowchart of information that is delivered by an application server and that is related to periodic service transmission according to an embodiment of this application;
FIG. 13 is a schematic block diagram of a communication apparatus according to this application; and
FIG. 14 is a block diagram of a structure of a communication apparatus according to an embodiment of this application.

### DESCRIPTION OF EMBODIMENTS

The following describes technical solutions of this application with reference to accompanying drawings.

It should be understood that names of all nodes and messages in this application are merely names set for ease of description in this application, and may be different in an actual network. It should not be understood that the names of all the nodes and the messages are limited in this application. On the contrary, any name that has a function that is the same as or similar to that of the node or the message used in this application is considered as a method or an equivalent replacement in this application, and falls within the protection scope of this application. Details are not described below again.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a 5th generation (5th generation, 5G) system, new radio (new radio, NR), or another evolved communication system.

The technical solutions provided in this application may be further applied to a future communication system, for example, a sixth generation mobile communication system. This is not limited in this application.

The technical solutions provided in this application may be further applied to machine type communication (machine type communication, MTC), a machine-to-machine communication long term evolution technology (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, the internet of vehicles. Communication manners in an internet of vehicles system are collectively referred to as vehicle to another device (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

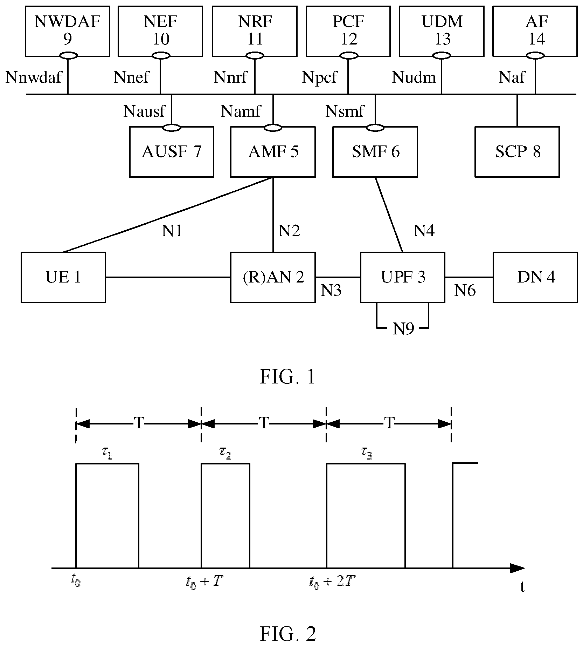

FIG. 1 is a schematic diagram of a network architecture applicable to an embodiment of this application. A 5G network architecture is taken as an example. The network architecture may include: user equipment (user equipment, UE) 1, a (radio) access network ((radio) access network, (R)AN) device 2, a user plane function (user plane function, UPF) network element 3, an access and mobility management function (access and mobility management function, AMF) network element 5, a session management function (session management function, SMF) network element 6, a network data analytics function (network data analytics function, NWDAF) network element 9, a policy control function (policy control function, PCF) module network element 12, and an application function (application function, AF) network element 14. Optionally, the network architecture may further include one or more of the following: a data network (data network, DN) network element 4, an authentication server function (authentication server function, AUSF) network element 7, a service communication proxy (service communication proxy, SCP) network element 8, a network exposure function (network exposure function, NEF) network element 10, a network element data repository function (network function repository function, NRF) network element 11, a unified data management (unified data management, UDM) network element 13, and the like.

The following briefly describes network elements shown in FIG. 1.
1. User equipment (user equipment, UE) 1: The user equipment 1 may also be referred to as a terminal device, an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data connectivity to a user, for example, a handheld device or vehicle-mounted device with a wireless connectivity function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network, or a terminal device in a future evolved public land mobile communication network (public land mobile network, PLMN). This is not limited in embodiments of this application.

As an example instead of a limitation, in this embodiment of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. Generic wearable smart devices include full-featured and largesize devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

In addition, in embodiments of this application, the terminal device may alternatively be a terminal device in an internet of things (internet of things, IoT) system. IoT is an important part of future development of information technologies. A main technical characteristic of the IoT is connecting things to a network by using a communication technology, to implement an intelligent network for human-machine interconnection and thing-thing interconnection.

2. (Radio) access network ((radio) access network, (R)AN) node (node) 2: The (radio) access network node 2 provides a network access function for user equipment, and can use transmission tunnels with different quality based on user levels, service requirements, and the like. The access network may be an access network using different access technologies. Currently, there are two types of radio access technologies: a 3GPP access technology (for example, a radio access technology used in a 3G, 4G, or 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB). The non-3GPP access technology is an access technology that does not comply with the 3GPP standard specification, for example, an air interface technology represented by an access point (access point, AP) in wireless fidelity (wireless fidelity, Wi-Fi).

An access network that implements a network access function based on a wireless communication technology may be referred to as a radio access network (radio access network, RAN). The radio access network can manage radio resources, provide an access service for the terminal device, and further complete forwarding of a control signal and user data between the terminal and a core network.

The radio access network may include but is not limited to: a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a radio relay node, a radio backhaul node, a transmission point (transmission point, TP), a transmission and reception point (transmission and reception point, TRP), or the like. Alternatively, the radio access network may be a gNB or a transmission point (a TRP or TP) in a 5G (for example, NR) system, or one antenna panel or a group of antenna panels (including a plurality of antenna panels) of a base station in the 5G system. Alternatively, the radio access network may be a network node constituting a gNB or a transmission point, for example, a baseband unit (BBU), a distributed unit (distributed unit, DU), a base station in a next-generation 6G communication system, or the like. A specific technology and a specific device form that are used by a radio access network device are not limited in embodiments of this application.

In some deployments, a gNB may include a centralized unit (centralized unit, CU) and a DU. The gNB may further include an active antenna unit (active antenna unit, AAU for short). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the access network device may be a device including one or more of a CU node, a DU node, s an AAU node. In addition, the CU may also be classified into a network device in a core network (core network, CN). This is not limited in this application.

In embodiments of this application, the access network device is a network device in the radio access network, and is used for providing a cell with a service, and the terminal device communicates with the cell by using a transmission resource (for example, a frequency domain resource or a spectrum resource) allocated by the access network device. The cell may belong to a macro base station (for example, a macro eNB or a macro gNB), or may belong to a base station corresponding to a small cell (small cell). The small cell herein may include: a metro cell (metro cell), a micro cell (micro cell), a pico cell (pico cell), a femto cell (femto cell), and the like. The small cells are characterized by small coverage and a low transmit power, and are applicable to providing high-rate data transmission services. The access network device may include a base station (gNB), for example, a macro base station, a micro base station, an indoor hotspot, or a relay node, and has functions of: sending a radio wave to the terminal device, to implement downlink data transmission in one aspect and send scheduling information to control uplink transmission in another aspect; and receiving a radio wave sent by the terminal device, to receive uplink data transmission.

In embodiments of this application, the user equipment or the access network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software.

A specific structure of an entity for performing the method provided in embodiments of this application is not particularly limited in this application provided that a program recording code of the method provided in embodiments of this application can be run to perform communication according to the method provided in embodiments of this application. For example, the entity for performing the method provided in embodiments of this application may be the user equipment or the access network device, or may be a functional module capable of invoking and executing the program in the user equipment or the access network device.

3. User plane function network element: The user plane function network element is configured to perform packet routing and forwarding, quality of service (quality of service, QoS) processing on user plane data, and the like.

In a 5G communication system, the user plane function network element may be the user plane function (user plane function, UPF) network element 3. In a future communication system, the user plane function network element may still be a UPF network element, or may have another name. This is not limited in this application.

4. Data network: The data network is configured to provide a network for data transmission.

In the 5G communication system, the data network may be the data network (data network, DN) 4. In a future communication system, the data network may still be the DN, or may have another name. This is not limited in this application.

5. Access and mobility management network element: The access and mobility management network element is configured to: route and forward the user plane data, perform the quality of service (quality of service, QoS) processing on the user plane data, or the like.

In the 5G communication system, the access and mobility management network element may be the access and mobility management function (access and mobility management function, AMF) network element 5. In a future communication system, the access and mobility management network element may still be the AMF network element, or may have another name. This is not limited in this application.

6. Session management network element: The session management network element is mainly configured to: manage a session, allocate and manage an internet protocol (internet protocol, IP) address of the terminal device, select an endpoint that can manage a user plane function interface and a policy control and charging function interface, notify downlink data, and the like.

In the 5G communication system, the session management network element may be the session management function (session management function, SMF) network element 6. In a future communication system, the session management network element may still be the SMF network element, or may have another name. This is not limited in this application.

7. Authentication server network element: The authentication server network element is mainly responsible for providing an authentication service.

In the 5G communication system, the authentication server network element may be the authentication server function (authentication server function, AUSF) network element 7. In a future communication system, the authentication server network element may still be the AUSF network element, or may have another name. This is not limited in this application.

8. Service communication proxy network element: The service communication proxy network element is responsible for indirect communication between a network element and a corresponding network element service.

In the 5G communication system, the service communication proxy network element may be the service communication proxy (service communication proxy, SCP) network element 8. In a future communication system, the session management network element may still be the SCP network element, or may have another name. This is not limited in this application.

9. Network data analytics network element: The network data analytics network element is responsible for network data collection, statistics, analysis and decision-making feedback, providing network data collection and analysis functions based on technologies such as big data and artificial intelligence.

In the 5G communication system, the network data analytics network element may be the network data analytics function (network data analytics function, NWDAF) network element 9. In a future communication system, the session management network element may still be the NWDAF network element, or may have another name. This is not limited in this application.

10. Network exposure network element: The network exposure network element is mainly configured to support capability and event exposure.

In the 5G communication system, the network exposure network element may be the network exposure function (network exposure function, NEF) network element 10. In the future communication system, a network exposure network element may still be the NEF network element, or may have another name. This is not limited in this application.

11. Network element data repository network element: The network element data repository network element is used by an operator network to expose data in the network to a third-party application server or receive data provided by a third-party application server for the network.

In the 5G communication system, the network element data repository network element may be the network element data repository function (network function repository function, NRF) network element 11. In a future communication system, the network element data repository network element may still be the NRF element, or may have another name. This is not limited in this application.

12. Policy control network element: The policy control network element is configured to: guide a unified policy framework of network behavior, provide policy rule information for a network element (such as the AMF network element or the SMF network element) or a terminal device, and the like.

In the 4G communication system, the policy control network element may be a policy and charging rules function (policy and charging rules function, PCRF) network element 12. In the 5G communication system, the policy control network element may be a policy control function (policy control function, PCF) network element. In a future communication system, the policy control network element may still be the PCF network element, or may have another name. This is not limited in this application.

13. Data management network element: The data management network element is configured to: process an identifier of a terminal device, perform access authentication, registration, mobility management, and the like.

In the 5G communication system, the data management network element may be the unified data management (unified data management, UDM) network element 13. In a future communication system, the unified data management may still be the UDM network element, or may have another name. This is not limited in this application.

14. Application network element: The application network element is configured to: perform application-affected data routing, access a network exposure function network element, interact with a policy framework to perform policy control, and the like.

In the 5G communication system, the application network element may be the application function (application function, AF) network element. In a future communication system, the application network element may still be the AF network element 14, or may have another name. This is not limited in this application.

It may be understood that the foregoing network elements or functions may be network elements in a hardware device, software functions running on dedicated hardware, or virtualized functions instantiated on a platform (for example, a cloud platform).

For ease of description, that an access and mobility management function network element is an AMF network element, a session management network element is an SMF network element, and a policy control network element is a PCF network element is used as an example for subsequent descriptions in this application.

Further, the AMF network element is briefly referred to as an AMF, the SMF network element is briefly referred to as an SMF, and the PCF network element is briefly referred to as a PCF. To be specific, in the subsequent descriptions of this application, all AMFs may be replaced with an access and mobility management function network element, all SMFs may be replaced with a session management function network element, and all PCFs may be replaced with a policy control function network element.

For ease of description, in this application, an information transmission method is described by using an example in which an apparatus is an AMF entity, an SMF entity, or a PCF entity. For an implementation method in which the apparatus is a chip in an AMF entity, a chip in an SMF entity, or a chip in a PCF entity, refer to specific descriptions about the method in which the apparatus is the AMF entity, the SMF entity, or the PCF entity. Details are not repeated.

In the network architecture, N1 is an interface between the UE 1 and the AMF 5. N2 is an interface between the (R)AN 2 and the AMF 5, and is configured to perform NAS message sending and the like. N3 is an interface between the RAN 2 and the UPF 3, and is configured to transmit user plane data and the like. N4 is an interface between the SMF 6 and the UPF 3, and is configured to transmit information such as tunnel identification information of an N3 connection, data buffering indication information, and a downlink data notification message. An N6 interface is an interface between the UPF 3 and the DN 4, and is configured to transmit user plane data and the like. N9 is an interface between UPFs. Namf is a service-based interface presented by the AMF 5, Nsmf is a service-based interface presented by the SMF 6, Nausf is a service-based interface presented by the AUSF 7, Nnwdaf is a service-based interface presented by the NWDAF 9, Nnef is a service-based interface presented by the NEF 10, Nnrf is a service-based interface presented by the NRF 11, Npcf is a service-based interface presented by the PCF 12, Nudm is a service-based interface presented by the UDM 13, and Naf is a service-based interface presented by the AF 14.

It should be noted that names of the network elements and the communication interfaces between the network elements in FIG. 1 are briefly described by using an example specified in a current protocol. However, embodiments of this application are not limited to being applied only to a currently known communication system. Therefore, standard names used when the current protocol is used as an example for description are all function descriptions. A specific name of a network element, an interface, signaling, or the like is not limited in this application, only represents a function of the network element, the interface, or the signaling, and may be correspondingly extended to another system, for example, a 2G, 3G, 4G, or future communication system.

Currently, to ensure a low interaction latency, an existing media service usually uses a real-time transport protocol, a real-time transport control protocol, a real-time streaming protocol, and the like that are based on a user datagram protocol. In this way, a periodic feature of a media encoder is presented in a transmission process. In other words, a specific periodic characteristic is presented in a data transmission process of a real-time service (including VR, AR, MR, and the like). Specifically, transmission characteristics of these services may be summarized as follows: One piece of data of the service is transmitted at a fixed interval, and duration of each time of data transmission may be equal or may be unequal. Specific transmission duration depends on factors such as a data volume value of each time of transmission and a network environment during transmission. In this application, a service having the foregoing characteristics is referred to as a periodic (periodic) service.

FIG. 2 is a schematic diagram of a transmission process of a periodic service according to this application. As shown in FIG. 2, one piece of data of the periodic service is sent at an interval of T. Data 1 of the periodic service is transmitted at a moment *t*₀, transmission duration of the data 1 is *τ*₁ , and a periodicity in which the data 1 is located is a periodicity 1. Data 2 of the periodic service is transmitted at a moment *t*₀ + *T,* transmission duration of the data 2 is *τ*₂, and a periodicity in which the data 2 is located is a periodicity 2. Data 3 of the periodic service is transmitted at a moment *t*₀ + 2*T*, transmission duration of the data 3 is *τ*₃, and a periodicity in which the data 3 is located is a periodicity 3. Specifically, the one piece of data may include one or more data packets. It should be understood that only three periodicities are used as examples for description in FIG. 2. However, this is not limited in this application. For example, a periodic service similar to that in FIG. 2 may occur in the following scenarios: downlink transmission of media services such as VR, AR, and MR, uplink video collection, factory device information reporting in an industrial wireless sensor network (industrial wireless sensor network, IWSN), freight periodic reporting in IoT, periodic control information delivery in a latency sensitive network (time sensitive network, TSN) service, and the like. For a media service, one piece of data may also be referred to as one frame.

When a terminal device performs a mobility handover in a transmission process of the periodic service, the terminal device needs to be disconnected from a source access network device and reconnected to a target access network device. In an existing handover process, a service that is currently being transmitted is not considered. For a periodic service, if a handover occurs when data in one periodicity of the periodic service is not completely sent or only a part of data in one periodicity of the periodic service is sent, a problem such as interruption and/or disorder occurs on the data at a receiving end. This causes an extra latency to a real-time service and affects user experience. Therefore, during the foregoing mobility handover of the terminal device, how to improve transmission reliability of the periodic service in the handover process is an urgent problem to be resolved.

In view of this, this application provides a periodic service transmission method, to improve transmission reliability of a periodic service in a handover process by determining an appropriate handover moment.

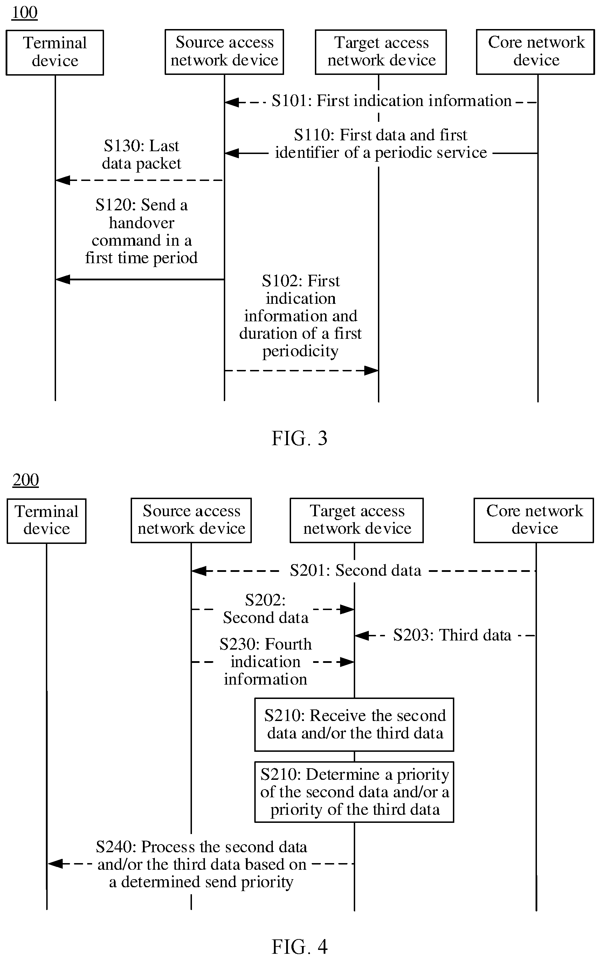

FIG. 3 is a schematic flowchart of a periodic service transmission method according to an embodiment of this application. It should be understood that the method 100 shown in FIG. 3 is applicable to transmission of a downlink periodic service.

S 110: A source access network device receives first data and a first identifier. The first identifier indicates a last data packet of the first data, and the first data is data in a first periodicity of a periodic service.

In this application, the periodic service may include a plurality of transmission periodicities. The first periodicity is one periodicity of the periodic service. The first data is the data in the first periodicity of the periodic service. Any one of the data 1, the data 2, and the data 3 in FIG. 2 may be used as an example of the first data. For a media service, the first data may be understood as a frame or a burst (burst) service. The first data may include one or more data packets, and the first identifier indicates the last data packet of the first data.

In a possible implementation, the first identifier indicates the last data packet of the first data, and includes but is not limited to one or more of the following possibilities:
(1) The first identifier is added to a header of the last data packet of the first data. For example, when encapsulating the first data, a UPF may place the first identifier at a packet radio service tunneling protocol (general packet radio service tunneling protocol, GTP) layer on an N3 link, specifically, at a GTP-U protocol layer, that is, a GTP user plane (user, U) protocol layer. The protocol layer is referred to as a GTP layer in this application. When receiving the first data, the source access network device receives the first identifier from the GTP layer, to identify the last data packet of the first data based on the first identifier.
(2) The first identifier may alternatively be a quantity of data packets of the first data. When receiving the first data from the UPF, the source access network device may receive the first identifier from the UPF or an application server (application server, AS), determine the quantity of data packets of the first data based on the first identifier, and further determine the last data packet. For example, the first identifier may be added by the application server at an IP layer, a transmission layer, or an application layer of a data packet. Optionally, the first identifier may be added by the UPF at the GTP layer. When receiving the first data, the source access network device obtains, from the GTP layer, the IP layer, the transmission layer, the application layer, or the like, the first identifier added by the application server or the UPF, to determine the quantity of data packets of the first data based on the first identifier, and further identify the last data packet of the first data.
(3) The first identifier is added to a header of the X^{th} last data packet in the first data. A specific value of X may be preconfigured in the source access network device, or may be a value of X received by the source access network device from the SMF. Specifically, when performing periodic service information exchange with a core network element such as an SMF, the source access network device may obtain an identification method of the first identifier. The identification method includes the value of X. Similar to the foregoing descriptions, when encapsulating the first data, the UPF may place the first identifier at the GTP layer on the N3 link. When receiving the first data, the source access network device receives the first identifier from the GTP layer, to identify the X^{th} last data packet based on the first identifier, and further determine that the X^{th} data packet starting from the data packet is the last data packet.

For example, the source access network device first obtains that a preconfigured value of X is 4. If there are five data packets, the source access network device adds the first identifier to the 4^{th} last data packet, to be specific, adds the first identifier to the 2^{nd} data packet. After identifying the 2^{nd} data packet, the source access network device may determine that, the X^{th} data packet starting from the data packet, to be specific, the 4^{th} data packet, is the last data packet.

S 120: The source access network device sends a handover command to a terminal device in a first time period. A start moment of the first time period is a moment at which the last data packet is sent to the terminal device, an end moment of the first time period is an end moment of the first periodicity, and the handover command instructs the terminal device to perform a handover to a target access network device.

Optionally, the source access network device determines the first time period based on the first identifier and duration of the first periodicity. For example, the source access network device may determine, based on the first identifier, that the moment at which the last data packet is sent to the terminal device is the start moment of the first time period, and determine, based on the duration of the first periodicity, that the end moment of the first periodicity is the end moment of the first time period. The duration of the first periodicity may also be understood as a transmission periodicity of the periodic service, that is, T in FIG. 2. The source access network device may send the handover command to the terminal device at any moment of the first time period. For example, any moment of the first time period may be the start moment of the first time period or the end moment of the first time period. For example, the terminal device is indicated to perform a handover at a moment at which the source access network device completes sending of the first data.

According to the solution in this embodiment of this application, when the terminal device needs to perform a handover from the source access network device to the target access network device, the source access network device may send, based on the first identifier, the handover command to the terminal device at any moment of the first time period. The start moment of the first time period is the moment at which the last data packet is sent to the terminal device, and the end moment of the first time period is the end moment of the first periodicity. In other words, according to the solution of this application, the handover of the terminal device may be performed in a time period in which the source access network device completes sending of the first data in the first periodicity, that is, the first time period. This avoids interruption of sending the first data by the source access network device due to the handover, and improves transmission reliability of the periodic service.

In a possible implementation, the source access network device may send the handover command to the terminal device when sending the last data packet to the terminal device or at a moment at which sending of the last data packet is completed. In this manner, the terminal device may immediately perform the handover procedure after receiving the last data packet of the first data. This can fully use idle time in which no data is transmitted in the first periodicity, and reduce impact of the handover on data transmission in a next periodicity.

Optionally, the method further includes: S 130: The source access network device sends the last data packet to the terminal device.

The source access network device sends the first data to the terminal device. The source access network device may identify the last data packet by using the first identifier, to learn of the moment at which the last data packet of the first data is sent to the terminal device.

Optionally, the method 100 further includes: The source access network device determines the start moment of the first time period based on the first identifier.

The source access network device may determine the last data packet of the first data of the periodic service based on the first identifier, to determine that the moment at which the last data packet is sent to the terminal device is the start moment of the first time period.

Optionally, the method 100 further includes: The source access network device obtains the duration of the first periodicity, and determines the end moment of the first periodicity based on the duration of the first periodicity.

For example, the source access network device receives the duration of the first periodicity from the UPF, the SMF, or an NWDAD. Specifically, when receiving the first data from the UPF, the source access network device may obtain the duration of the first periodicity from the UPF. Alternatively, the source access network device may obtain periodicity information of the periodic service when performing periodic service information exchange with a core network element such as the SMF or the NWDAD. The periodicity information includes the duration of the first periodicity.

Optionally, the source access network device determines the duration of the first periodicity according to a service transmission rule. In a period of time before the handover command is sent, the source access network device may autonomously identify, according to the service transmission rule, the transmission periodicity of the periodic service, that is, the duration of the first period. For example, the source access network device determines, by monitoring a moment at which data is received from the UPF, that the service is a periodic service.

Specifically, the source access network device monitors a receiving moment of data from a UPF side in a period of time, and determines that an interval between a moment at which data is received each time and a moment at which data is received last time in the period of time is fixed, to determine that the service is one periodic service, and a periodicity of the periodic service, that is, the duration of the first periodicity, is the foregoing fixed time interval.

The source access network device may determine, based on a moment at which the 1^{st} data packet of the first data is sent to the terminal device and the duration of the first periodicity, that the end moment of the first periodicity is the end moment of the first time period.

Optionally, the method 100 further includes: The terminal device performs a handover to the target access network device according to the handover command.

After receiving the handover command, the terminal device disconnects from the source access network device, and establishes a connection to the target access network device. For a specific handover process, refer to an existing protocol. Details are not described in this application.

Optionally, the method 100 further includes: S101: The source access network device receives first indication information. The first indication information indicates the source access network device to send the handover command to the terminal device in the first time period, indicates the source access network device to determine the start moment of the first time period based on the first identifier, or indicates that the first data is data of the periodic service.

The source access network device may receive first indication information from a core network device. The indication information indicates the source access network device to determine a handover moment in downlink periodic service transmission, and specifically includes determining the start moment of the first time period, or sending the handover command to the terminal device in the first time period.

Alternatively, when the first indication information indicates that the first data is data of the periodic service, the source access network device may autonomously determine the first time period when learning that the first data is the data of the periodic service and when a handover is needed subsequently, and then send the handover command to the terminal device in the first time period. To be specific, when the source access network device determines, based on a measurement report of the terminal device, that a signal of the target access network device is better, that "the first data is data of the periodic service" may be used as an additional trigger condition for the source access network device to determine the handover moment.

In other words, the first indication information may explicitly or implicitly indicate that the source access network device needs to perform optimization processing during the handover. Under an indication of the first indication information, the source access network device may perform the method 100 in this application.

The first indication information may be from the SMF. For example, the SMF may send the first indication information to the source access network device when a PDU session is established/modified.

Optionally, the first indication information may alternatively be from a third access network device, in other words, the third access network device serves as a source access network device before the terminal device performs a handover to the source access network device. When performing a handover, the third access network device and the source access network device indicate the source access network device to perform optimization processing in a subsequent handover process, specifically, including: indicating the source access network device to send the handover command to the terminal device in the first time period, indicating the source access network device to determine the start moment of the first time period based on the first identifier, or indicating that the first data is the data of the periodic service. In this manner, information exchange between an access network device and a core network device can be reduced, and communication overheads can be reduced.

Optionally, the first indication information may include the duration of the first periodicity. In other words, the first indication information may include the transmission periodicity of the periodic service.

In an implementation, the method 100 further includes: S102: The source access network device sends the first indication information and/or the duration of the first periodicity to the target access device.

To be specific, as described in S 101 above, the access network device may send the first indication information in a handover procedure.

According to the solution in this embodiment of this application, when the terminal device needs to perform a handover from the source access network device to the target access network device, the source access network device may send, based on the first identifier, the handover command to the terminal device at any moment of the first time period. The start moment of the first time period is the moment at which the last data packet is sent to the terminal device, and the end moment of the first time period is the end moment of the first periodicity. In other words, according to the solution of this application, the handover of the terminal device may be performed in a time period in which the source access network device completes sending of the first data in the first periodicity, that is, the first time period. This avoids interruption of sending the first data by the source access network device due to the handover, and improves transmission reliability of the periodic service.

FIG. 4 is another schematic flowchart of a periodic service transmission method according to an embodiment of this application. It should be understood that the method 200 shown in FIG. 4 is applicable to transmission of a downlink periodic service.

S210: A target access network device receives second data from a source access network device and/or third data from a UPF. The second data is data in a second periodicity of a periodic service, and the third data is data in a third periodicity of the periodic service.

In a handover process of a terminal device, the source access network device sends the second data to the target access network device. In addition, after the terminal device performs a handover to the target access network device, the target access network device further receives the third data from the UPF.

S220: The target access network device determines a send priority of the second data and/or a send priority of the third data. The determining a send priority of the second data and/or a send priority of the third data includes at least one of the following: determining, based on a data type of the second data, whether to send the second data, determining whether to perform accelerated processing on the second data, determining a sending time sequence of the second data based on a second identifier, determining, based on a data type of the third data, whether to send the third data, determining whether to perform the accelerated processing on the third data, determining a sending time sequence of the third data based on a third identifier, and determining a sending time sequence of the second data and the third data.

The second identifier indicates a sequence number of the second data in the periodic service, and the type of the second data includes one or more of the following: a frame type, a fragment type, a bit rate type, and a viewing angle type. The type of the second data indicates transmission importance of the second data or indicates a level of criticality of user experience at a service layer corresponding to the second data.

Similarly, the third identifier indicates a sequence number of the third data in the periodic service, and the type of the third data includes one or more of the following: the frame type, the fragment type, the bit rate type, and the viewing angle type. The type of the third data indicates transmission importance of the third data or indicates a level of criticality of user experience at a service layer corresponding to the third data.

In a possible implementation, the target access network device may determine, based on the data type of the second data, whether to send the second data. A media service is used as an example. The data type of the second data includes but is not limited to one or more of the following: the frame type, the fragment type, the bit rate type, the viewing angle type, and the like. Specifically, the type of the second data indicates the transmission importance of the second data or indicates the level of criticality of user experience at the service layer corresponding to the second data. The frame type may be a data type such as an intra frame (I frame), a predicted frame (P frame), or a bi-directional predicted frame (B frame) in a video stream.

For example, the target access network device may determine, based on the frame type, whether the second data is a key frame, for example, a B frame or another frame that is not referenced. Because a non-key frame does not affect decoding of another frame, the frame may be directly discarded, in other words, the second data is not sent to the terminal device.

In a possible implementation, the target access network device may determine, based on the data type of the second data, whether to perform accelerated transmission. Optionally, whether to perform the accelerated transmission may be determined based on the data type of the second data.

For example, if the second data is data with a higher priority, such as data of the I frame or a basic layer, QoS accelerated transmission is performed on the second data in a transmission process. For example, the second data is scheduled to a high-quality channel with larger bandwidth, higher reliability, or a lower latency for transmission. If the third data is data with a low priority, such as data of the P frame, the B frame, or an enhancement layer, in this manner, a transmission speed of data with high importance may be accelerated, a latency problem caused in the handover process is reduced, and user experience is improved.

Optionally, whether to perform the accelerated transmission is determined depending on whether a quantity of pieces of to-be-sent second data is greater than a first threshold.

For example, after the terminal device establishes a connection to the target access network device, if it is determined that the quantity of pieces of to-be-sent second data exceeds the first threshold, the accelerated processing is performed on the to-be-sent second data.

In a possible implementation, the target access network device may determine the sending time sequence of the second data based on the second identifier, the sending time sequence may alternatively be understood as a sending sequence of the second data, and then the target access network device may send the second data to the terminal device based on the determined sending time sequence or sending sequence.

Specifically, for generation of the second identifier, refer to the generation method of the first identifier in S 110. For example, when receiving downlink second data, the UPF may determine a time stamp of the second data based on one fixed field in an RTP header, to determine a transmission sequence of at least two pieces of second data. The UPF may generate the second identifier. Similarly, the UPF places the second identifier at a GTP layer of the second data, and sends the second identifier to the source access network device. The source access network device may send the second identifier when sending the second data to the target access network device. The target access network device may determine, based on the second identifier, a sequence number of the second data in the periodic service, and then send the second data to the terminal device based on a sequence of the sequence number.

In this manner, the terminal device can receive the second data based on a periodicity in which the second data is located, so that a phenomenon such as frame freezing that may be caused by disorder can be avoided, and user experience can be improved.

The determining, based on a data type of the third data, whether to send the third data, the determining whether to perform the accelerated processing on the third data, and the determining a sending time sequence of the third data based on a third identifier are similar to the determining, based on a data type of the second data, whether to send the second data, the determining whether to perform accelerated processing on the second data, and the determining a sending time sequence of the second data based on a second identifier. Details are not described herein again.

In a possible implementation, the target access network device may determine the sending time sequence of the second data and the third data.

Optionally, the target access network device sends the second data earlier in a time sequence based on that the second data is from the source access network device and the third data is from the UPF. For example, the target access network receives the third data from the UPF and the second data from the source access network. When sending data to UE, the target access network first sends the second data, and then sends the third data.

Optionally, with reference to determining the sending time sequence of the second data based on the second identifier and determining the sending time sequence of the third data based on the third identifier, after receiving the second data from the source access network device and the third data from the UPF, the target access network device determines a data sending sequence based on the second identifier and the third identifier in the second data and the third data. The second identifier indicates the sequence number of the second data in the periodic service, and the third identifier indicates the sequence number of the third data in the periodic service.

According to the solution in this embodiment of this application, the target access network device may perform optimization processing on the received second data and/or third data, and send the processed second data to the terminal device. In this manner, a phenomenon such as frame freezing that may be caused by disorder can be avoided, and user experience can be improved.

Optionally, before S210, the method 200 further includes: S201: The UPF sends the second data to the source access network device.

Optionally, when sending the second data, the UPF may further send the second identifier. Optionally, the UPF may not send the second identifier, and the UPF sends the second data in a sequence of periodicities in which data of the periodic service is located, so that the source access network device generates one second identifier for each piece of second data in a sequence of receiving the second data.

It should be understood that, in a forwarding tunnel process, the UPF may send one or more pieces of second data to the source access network device. For the downlink periodic service, any piece of data sent by the UPF to the source access network device may be referred to as the second data. A periodicity in which each piece of second data is located is referred to as a second periodicity, and the second periodicity is one periodicity of the periodic service. In other words, each of one or more periodicities of the periodic service may be referred to as a second periodicity, and each second periodicity includes one piece of second data. For example, it is assumed that in the forwarding tunnel process, the UPF separately sends data 2, data 3, data 4, and data 5 that are in a periodicity 2 to a periodicity 5 to the source access network device. In this application, any one of the data 2, the data 3, the data 4, and the data 5 is an example of the second data, and any one of the periodicity 2, the periodicity 3, the periodicity 4, and the periodicity 5 in which the data 2, the data 3, the data 4, and the data 5 are located is an example of the second periodicity.

Optionally, before S210, the method 200 further includes: S202: The source access network device sends the second data to the target access device. For example, the source access network device sends the second data to the target access device through a forwarding tunnel between the source access network device and the target access network device.

Optionally, in S202, the source access network device may further send the second identifier to the target access network device.

Optionally, before S210, the method 200 further includes: S203: The UPF sends the third data to the target access network device. For example, after determining that the terminal device performs a handover to the target access network device, the UPF sends the third data to the target access device.

It should be understood that after the UPF establishes a connection to the target access network device, the UPF may send one or more pieces of third data to the target access network device. For the downlink periodic service, any piece of data sent by the UPF to the target access network device may be referred to as the third data. A periodicity in which each piece of third data is located is referred to as a third periodicity, and the third periodicity is one periodicity of the periodic service. In other words, each of one or more periodicities of the periodic service may be referred to as a third periodicity, and each third periodicity includes one piece of third data. For example, it is assumed that after the UPF establishes the connection to the target access network device, the UPF separately sends data 8, data 9, ..., and data 20 that are in a periodicity 8 to a periodicity 20 to the source access network device. In this application, any one of the data 8, the data 9, ..., and the data 20 is an example of the third data, and any one of the periodicity 8, the periodicity 9, ..., and the periodicity 20 in which the data 8, the data 9, ..., and the data 20 are located is an example of the third periodicity.

In other words, in this application, data sent by the UPF to the source access network device is collectively referred to as the second data, and data sent by the UPF to the target access network device is collectively referred to as the third data. In other words, both the second data and the third data are generally referred to as one type of data.

Similarly, in S203, the UPF may further send the third identifier to the target access network device.

In an implementation, the method 200 further includes: S230: The target access network device receives fourth indication information from the source access network device. The fourth information indicates the target access network device to determine the send priority of the second data and/or a send priority of the third data.

In other words, the fourth indication information indicates the target access network device to perform optimization processing on the received second data and/or third data, including but not limited to one or more of the following: determining the sending time sequence of the second data and the third data, determining a send priority of the second data, determining, based on the data type of the second data, whether to send the data, determining whether to perform the accelerated processing on the second data, determining the sending time sequence of the second data based on the second identifier, determining, based on the data type of the third data, whether to send the third data, determining whether to perform the accelerated processing on the third data, determining the sending time sequence of the third data based on the third identifier, and the like.

Specifically, the source access network may send the fourth indication information to the target access network device when exchanging information with the target access network device in a handover preparation process, or send the fourth indication information when sending the second data.

In an implementation, the method 200 further includes: S240: The target access network device processes the second data and/or the third data based on a determined send priority. The processing the second data and/or the third data includes sending or skipping sending the second data and/or the third data based on the result determined in S220.

Optionally, in S202, the source access network device may send a sixth identifier to the target access network device. The sixth identifier indicates the data type of the second data.

It should be understood that the UPF may identify the data type of the second data.

When sending the second data to the source access network device, the UPF adds the sixth identifier to a GTP layer of a data packet of the second data. In the forwarding tunnel, the source access network device sends the second data to the target access network device, and correspondingly, the GTP layer also carries the sixth identifier.

For example, how the UPF identifies the data type of the second data may be that the UPF parses an application layer data packet to determine the type of the second data, or may be that when sending the second data, the application server adds corresponding identification information to an IP/transmission layer/application layer/another intermediate layer of the second data, to assist the UPF in identifying the data type of the second data. The foregoing is merely an example for description. This is not limited in this application.

Similarly, in S203, the UPF may alternatively send a seventh identifier to the target access network device. The seventh identifier indicates the data type of the third data.

It should be understood that when the UPF communicates with the target access network device, the target access network device may alternatively be understood as a next source access network device after the handover.

According to the solution in this embodiment of this application, the target access network device may perform optimization processing on the received second data, and send the processed second data to the terminal device. In this manner, a phenomenon such as frame freezing that may be caused by disorder can be avoided, and user experience can be improved.

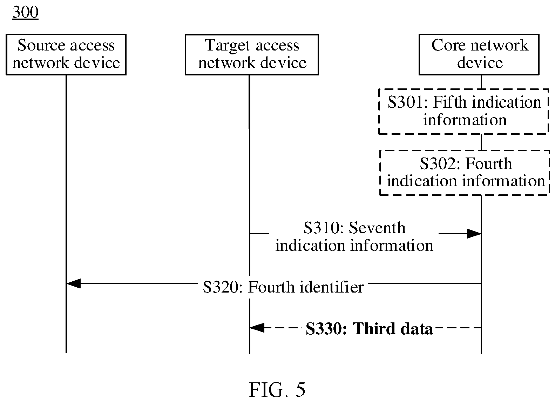

FIG. 5 is another schematic flowchart of a periodic service transmission method according to an embodiment of this application. It should be understood that the method 300 shown in FIG. 5 is applicable to transmission of a downlink periodic service.

S310: A UPF receives seventh indication information from a target access network device. The seventh indication information indicates a terminal device to perform a handover to the target access network device.

After the terminal device establishes a connection to the target access network, the target access network device performs N2, N3, and N4 path switching with an AMF, an SMF, and the UPF, so that the UPF may obtain the seventh indication information. The seventh indication information indicates that the terminal device has performed a handover to the target access network device.

S320: The UPF sends a fourth identifier to a source access network device in a fourth time period. The fourth identifier indicates that second data is a last piece of data sent by the UPF to the source access network device. A start moment of the fourth time period is a moment at which the UPF sends a last data packet of the second data, and an end moment of the fourth time period is an end moment of a second periodicity in which the second data is located.

Optionally, the fourth identifier may be an end marker endmarker. When encapsulating the second data, the UPF may place a second identifier at a GTP layer on an N3 link.

In this application, it should be understood that in a forwarding tunnel process, the UPF may send one or more pieces of second data to the source access network device. However, the UPF sends the fourth identifier only when sending the last piece of second data to the source access network device.

According to the solution in this embodiment of this application, when the terminal device needs to perform a handover from the source access network device to the target access network device, a user plane function network element may send the fourth identifier to the source access network device at any moment of the fourth time period. The start moment of the fourth time period is a moment at which the user plane function network element sends a last data packet, and the end moment of the fourth time period is the end moment of the second periodicity. The fourth identifier indicates that the second data is the last piece of data sent by the user plane function network element to the source access network device. In other words, according to the solution of this application, the fourth identifier of the user plane function network element may be sent in a time period in which sending of the second data is completed in the second periodicity, that is, the fourth time period. This avoids interruption of sending the second data by the user plane function network element due to the handover, and improves transmission reliability of the periodic service.

Optionally, the method further includes: The UPF determines the start moment of the fourth time period based on a moment at which the last data packet is sent to the source access network device.

The UPF may determine, based on the last data packet of the second data, the moment at which the last data packet is sent to the source access network device, that is, the start moment of the fourth time period.

Optionally, the method further includes: The UPF obtains duration of the second periodicity, and determines the end moment of the fourth time period based on the duration of the second periodicity.

The UPF receives the duration of the second periodicity from the SMF or an NWDAD. Specifically, the UPF may obtain periodicity information of the periodic service when performing periodic service information exchange with a core network element such as the SMF or the NWDAD. The periodicity information includes the duration of the second periodicity.

When sending the second data to the source access network device, the UPF may determine, based on a moment at which the 1^{st} data packet of the second data is sent to the source access network device and the duration of the second periodicity, that the end moment of the second periodicity is the end moment of the fourth time period.

Optionally, the method further includes: S330: The UPF sends third data to the target access network device based on the fourth identifier. The third data is data in a third periodicity of the periodic service.

Similarly, the UPF may generate a third identifier for the third data. The third identifier indicates a sequence number of the third data in the periodic service. In this manner, the target access network may determine a sending time sequence of the third data based on the third identifier, so that a phenomenon such as frame freezing that may be caused by disorder can be avoided, and user experience can be improved.

In an implementation, the method further includes: S301: The UPF receives fifth indication information from a core network device. The fifth indication information indicates the UPF to send the fourth identifier to the source access network device in the fourth time period, indicates the UPF to determine the fourth time period, or indicates that the second data is data of the periodic service.

Optionally, the fifth indication information may further indicate the UPF to send a first identifier, the second identifier, and/or the third identifier.

The UPF may generate the first identifier, the second identifier, and/or the third identifier for the data in the periodic service based on the fifth indication information, and then send the first identifier, the second identifier, and/or the third identifier.

Optionally, in the method 300, the method further includes: S302: The UPF may further receive the foregoing fourth indication information from the core network device. In this way, the UPF may send the fourth indication information to the source access network device, and the source access network device sends the fourth indication information to the target access network device through a forwarding tunnel.

Optionally, in the method 300, the UPF may further send a fifth identifier to the source access network device. The fifth identifier indicates the 1^{st} data packet of first data. In other words, the fifth identifier may indicate the source access network device to identify a sending moment of the 1^{st} data packet of the first data.

It should be understood that the method 100, the method 200, and the method 300 may all be used as independent solutions, or may be combined. For example, in a handover process of the terminal device, a handover moment is determined according to the solution in the method 100, optimization processing is performed on downlink second data and/or downlink third data according to the solution in the method 200, and a sending moment of the fourth identifier is determined according to the solution in the method 300.

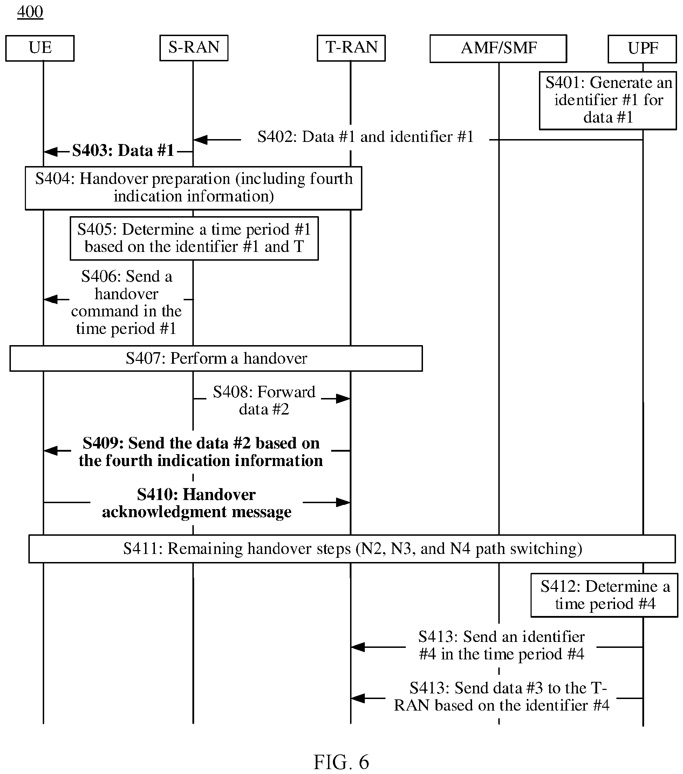

With reference to FIG. 6, the following describes a specific implementation of a combination of the periodic service transmission methods 100, 200, and 300 provided in this application. FIG. 6 is another schematic flowchart of a periodic service transmission method according to an embodiment of this application.

The method 400 shown in FIG. 6 may be performed by UE, an S-RAN (source RAN), a T-RAN (target RAN), an AMF, an SMF, or a UPF, or may be performed by a unit or module (for example, a circuit, a chip, or a system on a chip (system on a chip, SOC)) in UE, an S-RAN, a T-RAN, an AMF, an SMF, or a UPF. The following uses an example in which an execution body is the UE, the S-RAN, the T-RAN, the AMF, the SMF, or the UPF for description.

S401: The UPF identifies a data packet of a periodic service based on fifth indication information, and generates an identifier #1 for data #1 in a periodicity #1 of a downlink periodic service. The identifier #1 is used to identify a last data packet of the data #1. A transmission periodicity of the downlink periodic service is T. In other words, duration of the periodicity #1 is T.

S402: The UPF sends the data #1 to the S-RAN, and correspondingly, the S-RAN receives the data #1 from the UPF.

Optionally, the UPF may place the identifier #1 at a GTP layer on an N3 link, and the S-RAN parses the GTP layer and perceives the identifier #1, to determine the last data packet of the data #1.

Optionally, the UPF may determine the identifier #1 based on identification information added by an application server AS on a network side/transmission layer/application layer or another intermediate layer of the data #1, and place the identifier #1 at a GTP layer of the data #1. For example, the application server may add an identifier to an IP layer of the data #1, to assist the UPF in identifying the data packet. Alternatively, if the service uses the RTP protocol to perform media stream transmission, the UPF may identify service stream data according to a data packet detection rule (for example, an IP quintuple), and determine, based on a time stamp and a packet sequence number of an RTP layer, that the corresponding data #1 belongs to one frame, to determine the last data packet.

S403: The S-RAN sends the data #1 to the UE.

S404: The UE, the S-RAN, and the T-RAN perform a handover preparation process.

In a process of sending data to the UE, the S-RAN may determine, based on a measurement report of the UE, to hand over the UE to the T-RAN. The handover preparation process includes but is not limited to the following process: The S-RAN configures measurement control and reporting for the UE, the UE reports measurement results of a plurality of nearby RANs, and the S-RAN makes a handover decision based on the reported measurement results and determines a proper RAN as a T-RAN for a handover. The S-RAN sends a handover request (handover request) message to the T-RAN. The T-RAN performs access control on the UE and determines whether the UE can access the T-RAN. After completing access control, the T-RAN sends a handover request acknowledgment (handover request ACK) message.

S405: In a process of sending the data #1, the S-RAN determines a time period #1 based on the identifier #1 and the transmission periodicity T (which is also the duration of the periodicity #1) of the periodic service.

Specifically, the S-RAN may determine, based on the identifier #1, that a moment at which the last data packet of the data #1 is sent is a start moment of the time period #1, and determine, based on a moment at which the 1^{st} data packet of the data #1 is sent and the periodicity T, that an end moment of the periodicity #1 in which the data #1 is located is an end moment of the time period #1.

S406: The S-RAN sends a handover command (HO cmd) to the UE at any moment of the time period #1, to indicate the UE to perform a handover to the T-RAN. Correspondingly, the UE receives the handover command. S405 and S406 are similar to S 120 in the foregoing method 100.

Optionally, the S-RAN may send the handover command to the UE when the last data packet of the data #1 is sent. In other words, the handover command and the last data packet are sent to the UE together.

Optionally, the S-RAN may send the handover command to the UE after the last data packet of data #1 is sent to the UE. In other words, the last data packet is first sent to the UE, and then the handover command is sent.

S407: The UE immediately performs a handover procedure according to the handover command. Specifically, the UE disconnects from the S-RAN, and establishes a connection to the T-RAN.

It should be understood that before performing the handover procedure, the UE has received the last data packet of the data #1, to be specific, has completed receiving of the data #1.

S408: In a handover process of the UE, the S-RAN and the T-RAN perform procedures such as forwarding tunnel establishment and data sending status synchronization (SN status forwarding). In this process, the UPF sends data #2 to the S-RAN, and the S-RAN sends the data to the T-RAN through a forwarding tunnel. This step is similar to those in S201 and S202.

S409: The T-RAN sends the data #2 to the UE based on fourth indication information. This step is similar to that in S220.

In the handover process, the S-RAN may send the fourth indication information to the T-RAN in any time of information exchange with the T-RAN. The fourth indication information indicates the T-RAN to perform optimization processing on the data #2. Specifically, the fourth indication information includes: determining a send priority of the data #2 based on a data type of the data #2.

Optionally, in S408, when sending the data #2 to the T-RAN, the S-RAN may alternatively send an identifier #6. The identifier #6 indicates the data type of the data #2, that is, transmission importance or a level of criticality of the data #2. In this way, in S409, the T-RAN may determine, based on the identifier #6, a send priority of sending the data #2 to a terminal device.

Optionally, if in S408, the S-RAN sends an identifier #2 to the T-RAN, where the identifier #2 indicates a sequence number of the data #2 in the periodic service, to be specific, the data #2 is data in the X^{th} periodicity of the periodic service, or a second periodicity is the X^{th} periodicity, in S409, the T-RAN may determine a sending time sequence of the data #2 based on the identifier #2. Alternatively, a sending sequence of the data #2 may be determined.

Optionally, the S-RAN may send the fourth indication information when initiating the handover request (handover request) message to the T-RAN in S404.

Optionally, the S-RAN may alternatively send the fourth indication information when sending the data #2 to the T-RAN in S408.

In other words, specifically, the procedure in S220 may be implemented in S404 or S408.

S410: After the handover is completed, the UE sends a handover acknowledgment message to the T-RAN, to indicate that the handover is completed.

After disconnecting data transmission with the S-RAN, the UE starts a downlink synchronization process with the T-RAN, and then initiates a random access process to obtain uplink timing and uplink resource allocation. The UE sends an RRC connection reconfiguration complete message to the S-RAN, to indicate that the handover is completed.

S411: In the method 400, the UE, the S-RAN, the T-RAN, the AMF, the SMF, the UPF, and the like may complete remaining handover steps based on an existing standard procedure. The steps include: The T-RAN triggers path switching (path switch), and the T-RAN, the AMF, the SMF, and the UPF perform N2, N3, and N4 path switching.

Specifically, after completing handover work, the T-RAN performs an N2 path switching procedure, and the T-RAN initiates the request to the AMF. The AMF indicates the SMF to change an S-RAN of a downlink N3 tunnel to the T-RAN. The SMF initiates an N4 session modification procedure to the UPF, to indicate the UPF to perform a handover procedure. The UPF updates the N3 tunnel based on an indication.

S412: After the UPF determines that an endpoint of the N3 tunnel is updated, or it may be understood as after the UPF receives seventh indication information, the seventh indication information indicates the UE to perform a handover to the T-RAN, and the UPF determines a time period #4. A start point of the time period #4 is a moment at which a last data packet of the data #2 is sent, and an end moment of the time period #4 is an end moment of a periodicity #2 in which the data #2 is located.

S413: The UPF sends an identifier #4 to the S-RAN at any moment of the time period #4. The identifier #4 indicates that the data #2 is a last piece of data sent by the UPF to the S-RAN. Specifically, the identifier #4 may be an end marker endmarker added to a data packet of the data #2. S412 and S413 are similar to S320.

S414: The UPF sends data #3 to the T-RAN based on the identifier #4. The data #3 is data in a periodicity #3 of the periodic service. In other words, the UPF sends data in a next periodicity of the data #2 to the T-RAN based on the identifier #4.

Similar to S408 and S409, in S414, when sending the data #3, the UPF may further send an identifier #3. The identifier #3 indicates a sequence number of the data #3 in the periodic service.

Similarly, the T-RAN may also perform optimization processing similar to that in S409 on the data #3.

According to the solution in this embodiment of this application, when the terminal device needs to perform a handover from the source access network device to the target access network device, the source access network device may determine, based on a first identifier, a last data packet of first data of the periodic service, to further determine a moment at which the last data packet is sent to the terminal device. The source access network device may determine a first time period. A start moment of the first time period is the moment at which the last data packet is sent to the terminal device, and an end moment of the first time period is an end moment of a first periodicity. The source access network device may send a handover command to the terminal device at any moment of the first time period. In other words, according to the solution of this application, a handover of the terminal device may be performed at time at which sending of the first data is completed in the first periodicity. This avoids an interruption problem of receiving the first data by the terminal device in a handover process, improves transmission reliability of the periodic service, and improves user experience.

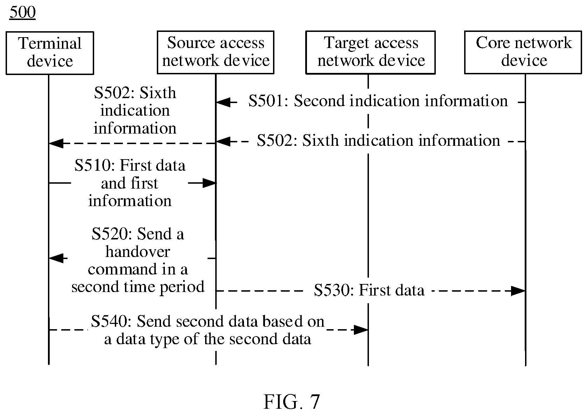

FIG. 7 is another schematic flowchart of a periodic service transmission method according to an embodiment of this application. It should be understood that the method 500 shown in FIG. 7 is applicable to transmission of an uplink periodic service.

S510: A terminal device sends first data and first information to a source access network device. The first information is used to determine transmission duration of the first data, and the first data is data in a first periodicity of a periodic service. Correspondingly, the source access network device receives the first data and the first information.

The transmission duration of the first data may be understood as time that needs to be used to transmit the first data, is duration of the time, and may be represented by a value, for example, *τ*₁ , *τ*₂ , or *τ*₃ in FIG. 2.

In this application, the periodic service may include a plurality of transmission periodicities. The first periodicity is one periodicity of the periodic service. The first data is the data in the first periodicity of the periodic service. Any one of the data 1, the data 2, and the data 3 in FIG. 2 may be used as an example of the first data. For a media service, the first data may be understood as a frame or a burst (burst) service. When sending the first data to the source access network device, the terminal device further sends the first information. The first information is used to determine the transmission duration of the first data.

Optionally, the source access network device determines the transmission duration of the first data based on the first information.

In a possible implementation, that the first information is used to determine the transmission duration of the first data includes but is not limited to the following possibilities:

(1) The first information is data volume information of the first data, and the source access network device may determine the transmission duration of the first data based on the data volume information and a communication condition.

(2) The first information is transmission duration information of the first data. To be specific, the terminal device may estimate transmission duration based on a data volume value of the first data and a communication environment, and then send the transmission duration information to the source access network device.

(3) If data volume values of a plurality of data packets included in the first data are the same or have a small difference, the first information may be a quantity of data packets included in the first data. After receiving the 1^{st} data packet, the source access network device may determine the transmission duration of the first data based on transmission time of the 1^{st} data packet and the quantity of data packets.

For example, the receiving first information from the terminal device includes: receiving the first information from the terminal device by using a packet data convergence protocol PDCP layer or a service data adaptation protocol SDAP layer.

To be specific, the terminal device may add the first information to a PDCP layer/an SDAP layer of an uplink data packet. When receiving the first data, the source access network device perceives the first information from the PDCP layer/SDAP layer, to determine the transmission duration of the first data based on the first information.

It should be understood that, in this application, the first data and the first information may be sent together, or may be sent separately. To be specific, the terminal device first sends the first information, and then sends the first data. This is not limited in this application.

S520: The source access network device sends a handover command to the terminal device in a second time period. The second time period is determined based on a receiving moment of the 1^{st} data packet of the first data, the transmission duration, and duration of the first periodicity, and the handover command instructs the terminal device to perform a handover to a target access network device.

Optionally, the source access network device determines the second time period based on the receiving moment of the 1^{st} data packet of the first data, the transmission duration, and the duration of the first periodicity. For example, based on the receiving moment of the 1^{st} data packet of the first data and the transmission duration of the first data, a start moment of the second time period is determined as a moment obtained through subtracting twice the communication latency from a moment at which receiving of the first data by the source access network device is completed. Based on the receiving moment of the 1^{st} data packet of the first data and the duration of the first periodicity, an end moment of the second time period is determined as a moment obtained through subtracting twice the communication latency from an end moment of the first periodicity on a source access network device side. The duration of the first periodicity may also be understood as a transmission periodicity of the periodic service, that is, T in FIG. 2. The source access network device may send the handover command to the terminal device at any moment of the second time period. For example, any moment of the second time period may be the start moment of the second time period or the end moment of the second time period.

It should be understood that the source access network device may determine a communication latency between the source access network device and the terminal device. A sum of the receiving moment of the 1^{st} data packet of the first data and the transmission duration of the first data is the moment at which receiving of the first data by the source access network device is completed. A moment at which sending of the first data by the terminal device is completed can be determined through subtracting the communication latency from the sum. A sum of the receiving moment of the 1^{st} data packet of the first data and the duration of the first periodicity is the end moment of the first periodicity on the source access network device side. An end moment of the first periodicity on a terminal device side may be determined through subtracting the communication latency from the sum. The start moment of the second time period determined by the source access network device may be the moment obtained through subtracting twice the communication latency from the moment at which receiving of the first data by the source access network device is completed. The end moment of the second time period determined by the source access network device may be the moment obtained through subtracting twice the communication latency from the end moment of the first periodicity on the source access network device side. The source access network device sends a handover command to the terminal device in the second time period. A moment at which the handover command arrives at the terminal device is in a fifth time period. A start moment of the fifth time period is a moment at which the terminal device just completes sending of the first data, and an end moment of the fifth time period is the end moment of the first periodicity on the terminal device side. To be specific, it is ensured that time at which the handover command arrives at the terminal side is time at which the terminal device completes sending of the first data.

According to the solution in this embodiment of this application, when the terminal device needs to perform a handover from the source access network device to the target access network device, the source access network device may send, based on the first information, the handover command to the terminal device at any moment of the second time period. The start moment and the end moment of the second time period are determined based on the receiving moment of the 1^{st} data packet of the first data, the transmission duration, and the duration of the first periodicity. In other words, according to the solution of this application, a handover of the terminal device may be performed in a time period in which the terminal device completes sending of the first data in the first periodicity, that is, the second time period. This avoids interruption of sending the first data by the terminal device due to the handover, and improves transmission reliability of a periodic service.

In a possible implementation, the source access network device may send the handover command to the terminal device at the start moment of the second time period. In this manner, the moment at which the handover command arrives at the terminal device is exactly the moment at which the terminal device completes sending of the first data. To be specific, the terminal device may immediately perform the handover procedure when sending of the first data is completed. This can fully use idle time in which no data is transmitted in the first periodicity, and reduce impact of the handover on data transmission in a next periodicity.

Optionally, the method 500 further includes: The source access network device determines the start moment of the second time period based on the receiving moment of the 1^{st} data packet of the first data and the transmission duration.

Optionally, the method 500 further includes: The source access network device obtains the duration of the first periodicity, and determines the end moment of the second time period based on the receiving moment of the 1^{st} data packet and the duration of the first periodicity.

For example, the source access network device receives the duration of the first periodicity from the SMF or an NWDAD. Specifically, when receiving the first data from the terminal device, the source access network device may obtain the duration of the first periodicity from the terminal device. Alternatively, the source access network device may obtain periodicity information of the periodic service when performing periodic service information exchange with a core network element such as the SMF or the NWDAD. The periodicity information includes the duration of the first periodicity.

The source access network device may determine, based on the moment at which the 1^{st} data packet of the first data is received and the duration of the first periodicity, that the end moment of the first periodicity is the end moment of the first time period on the source access network side.

Optionally, the method 500 further includes: S530: The source access network device sends the first data to the UPF.

Optionally, the method 500 further includes: The terminal device performs a handover to the target access network device according to the handover command.

After receiving the handover command, the terminal device disconnects from the source access network device, and establishes a connection to the target access network device. For a specific handover process, refer to an existing protocol. Details are not described in this application.

In an implementation, the method 500 further includes: S501: The source access network device receives second indication information. The second indication information indicates the source access network device to send the handover command to the terminal device in the second time period, indicates the source access network device to determine the start moment of the second time period, or indicates that the first data is data of the periodic service.

The source access network device may receive second indication information from a core network device. The indication information indicates the source access network device to determine a handover moment in uplink periodic service transmission, and specifically includes determining the start moment of the second time period, or sending the handover command to the terminal device in the second time period.

In an implementation, the method 500 further includes: S502: The terminal device receives sixth indication information. The sixth indication information indicates the terminal device to send the first information.

Optionally, the sixth indication information may be from the core network device by using the source access network device. To be specific, the core network device sends the sixth indication information to the source access network device, and the source access network device sends the sixth indication information to the terminal device. The terminal device sends the first information under an action of the indication information.

Optionally, after identifying that the first data is the data of the periodic service, the terminal device may alternatively send the first information autonomously.

When the second indication information indicates that the first data is the data of the periodic service, the information may be used as an implicit indication. When learning that the first data is the data of the periodic service, the source access network device may autonomously determine the second time period when a handover is needed subsequently, and then send the handover command to the terminal device in the second time period. To be specific, when the source access network device determines, based on a measurement report of the terminal device, that a signal of the target access network device is better, that "the first data is data of the periodic service" may be used as an additional trigger condition for the source access network device to determine the handover moment.

In other words, the second indication information may explicitly or implicitly indicate that the source access network device needs to perform optimization processing during the handover. Under an indication of the second indication information, the source access network device may perform the method 500 in this application.

The second indication information may be from the SMF. For example, the SMF may send the second indication information to the source access network device when a PDU session is established/modified.

Optionally, the second indication information may include the duration of the first periodicity. In other words, the second indication information may include the transmission periodicity of the periodic service.

Optionally, after the terminal device performs a handover to the target access network device, the method 500 further includes: S540: The terminal device sends second data to the target access network device based on a data type of the second data. The second data is data in a second periodicity of the periodic service.

The terminal device may determine, based on the data type of the second data, whether to send the second data. The second data is the data in the second periodicity of the periodic service. Specifically, the terminal device may parse a data type of an application layer, to determine the data type of the second data. A media service is used as an example. The data type of the second data includes but is not limited to one or more of the following: a frame type, a fragment type, a bit rate type, a viewing angle type, and the like. The frame type may be a data type such as an intra frame (I frame), a predicted frame (P frame), or a bi-directional predicted frame (B frame) in a video stream.

For example, the terminal device may determine, based on the frame type, whether the second data is a key frame. For a non-key frame, for example, if the second data is a frame that has small impact on decoding of another frame, such as a P frame or a B frame, the frame may be discarded, in other words, the second data is not sent to the target access network device. For a key frame, for example, if the second data is a frame that is critical for decoding another frame, such as an I frame, the key frame is sent, in other words, the second data is sent to the target access network device.

Optionally, in the method 500, the terminal device may send a fifth identifier to the source access network device. The fifth identifier indicates the 1^{st} data packet of the first data. In other words, the fifth identifier may indicate the source access network device to identify the receiving moment of the 1^{st} data packet of the first data.

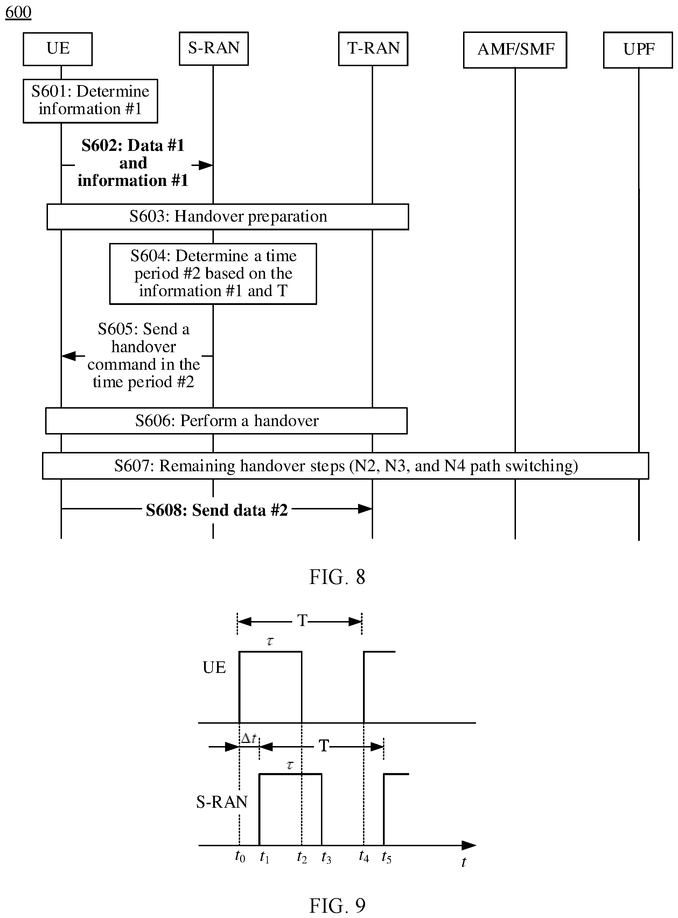

With reference to FIG. 8, the following describes a specific implementation of the periodic service transmission method 500 provided in this application. FIG. 8 is another schematic flowchart of a periodic service transmission method according to an embodiment of this application.

The method 600 shown in FIG. 8 may be performed by UE, an S-RAN (source RAN), a T-RAN (target RAN), an AMF, an SMF, or a UPF, or may be performed by a unit or module (for example, a circuit, a chip, or a system on a chip (system on a chip, SOC)) in UE, an S-RAN, a T-RAN, an AMF, an SMF, or a UPF. The following uses an example in which an execution body is the UE, the S-RAN, the T-RAN, the AMF, the SMF, or the UPF for description.

S601: The UE determines a data volume value M of data #1 in a periodicity #1 of an uplink periodic service. A transmission periodicity of the uplink periodic service is T, in other words, duration of the periodicity #1 is T.

S602: The UE sends the data #1 and information #1 to the S-RAN, and correspondingly, the S-RAN receives the data #1 and the information #1 from the UE. The information #1 is the data volume value M of the data #1.

Optionally, the UE may place the information #1 at a PDCP/SDAP layer, and the S-RAN parses the PDCP/SDAP layer and perceives the information #1, to determine the data volume value M of the data #1.

S603: The UE, the S-RAN, and the T-RAN perform a handover preparation process.

In a process in which the UE sends data to the S-RAN, the S-RAN may determine, based on a measurement report of the UE, to hand over the UE to the T-RAN. The handover preparation process includes but is not limited to the following process: The S-RAN configures measurement control and reporting for the UE, the UE reports measurement results of a plurality of nearby RANs, and the S-RAN makes a handover decision based on the reported measurement results and determines a proper RAN as a T-RAN for a handover. The S-RAN sends a handover request (handover request) message to the T-RAN. The T-RAN performs access control on the UE and determines whether the UE can access the T-RAN. After completing access control, the T-RAN sends a handover request acknowledgment (handover request ACK) message.

S604: In a process of receiving the data #1, the S-RAN determines a time period #2 based on a receiving moment of the 1^{st} data packet of the data #1, the information #1, and the transmission periodicity T (which is also the duration of the periodicity #1) of the periodic service.

The following uses FIG. 9 as an example to describe a method for determining the time period #2 by the S-RAN. FIG. 9 is a schematic diagram of a transmission process of data #1 according to this application. As shown in FIG. 9, a terminal device sends the data #1 and information #1 at a *t*₀ moment. The information #1 indicates a data volume value M of the data #1.

It is assumed that available uplink transmission bandwidth between UE and an S-RAN is R, and a transmission latency between the UE and the S-RAN is Δt . When receiving the information #1, the S-RAN may determine, based on the data volume value M and the uplink transmission bandwidth R that are indicated by the information #1, that transmission duration of the data #1 is *τ* = *M* / *R*. Further, the S-RAN determines, based on a receiving moment *t*₁ of the 1^{st} data packet of the data #1 and the transmission duration *τ*, that a moment at which receiving of the data #1 is completed is *t₃* = *t*₁ + *τ,* and the S-RAN may determine that a moment at which the UE completes sending of the first data is *t*₂ = *t*₃ - Δ*t* . Similarly, the S-RAN determines, based on the receiving moment *t*₁ of the 1^{st} data packet of the data #1 and the duration *T* of the periodicity #1, that an end moment of the periodicity #1 on an S-RAN side is *t*₅ = *t*₁ + *T*, and the S-RAN may determine that an end moment of the periodicity #1 on a UE side is *t*₄ = *t*₅ - Δ*t*. Therefore, a start moment of the time period #2 determined by the S-RAN is a moment obtained through subtracting twice the communication latency Δ*t* from a moment at which receiving of the data #1 is completed, that is, *t*₃ - 2Δ*t*. An end moment of the time period #2 is a moment obtained through subtracting twice the communication latency Δ*t* from the end moment of the periodicity #1 on the S-RAN side, that is, *t*₅ - 2Δt .

S605: The S-RAN sends a handover command (HO cmd) to the UE at any moment of the time period #2, and correspondingly, the UE receives the handover command.

FIG. 9 is still used as an example. The start moment of the time period #2 determined by the S-RAN is *t₃* - 2Δ*t* , and the end moment of the time period #2 is *t*₅ - 2Δ*t* . The S-RAN sends the handover command to the UE in the time period #2, time at which the handover command arrives at the terminal device is in a time period #5. A start moment of the time period #5 corresponds to a start moment of a time period #4. To be specific, if the handover command is sent at the start moment *t₃* - 2Δ*t* of the time period #4, a moment at which the UE receives the handover command is *t₂* . An end moment of the time period #5 corresponds to an end moment of the time period #4. To be specific, if the handover command is sent at the end moment *t₅* - 2Δ*t* of the time period #4, the moment at which the UE receives the handover command is *t*₄ . In other words, time at which the handover command arrives at the UE is a moment at which the UE completes sending of the data #1 or is in an idle time period in which no data is transmitted in the periodicity #1.

Optionally, the S-RAN may send the handover command to the UE at the moment *t*₃ *-* 2Δ*t* . The moment at which the handover command arrives at the UE is the moment *t*₂ , that is, the moment at which the UE completes sending of the data #1.

S606: The UE immediately performs a handover procedure according to the handover command. Specifically, the UE disconnects from the S-RAN, and establishes a connection to a T-RAN.

It should be understood that the UE has sent the data #1 before performing the handover procedure.

S607: The UE, the S-RAN, the T-RAN, the AMF, the SMF, the UPF, and the like may complete remaining handover steps based on an existing standard procedure, including steps such as N2, N3, and N4 path switching (path switch).

S608: After the UE performs a handover to the T-RAN, the UE sends one or more pieces of data #2 to the T-RAN. The UE may further discard the data #2 based on a data type of the data #2.

According to the solution in this embodiment of this application, when the terminal device needs to perform a handover from the source access network device to the target access network device, the source access network device may determine, based on the first information, a moment at which receiving of the first data of the periodic service is completed, to further determine a second time period. A start moment of the second time period is a moment obtained through subtracting twice the communication latency from a moment at which receiving of the first data by the source access network device is completed. An end moment of the second time period is a moment obtained through subtracting twice the communication latency from an end moment of the first periodicity on a source access network device side. The source access network device may send the handover command to the terminal device at any moment of the second time period. To be specific, it is ensured that time at which the handover command sent by the source access network device arrives at a terminal side is time at which the terminal device completes sending of the first data. In other words, according to the solution of this application, a handover of the terminal device may be performed at time at which sending of the first data is completed in the first periodicity. This avoids an interruption problem of sending the first data by the terminal device in a handover process, and improves transmission reliability of the periodic service.

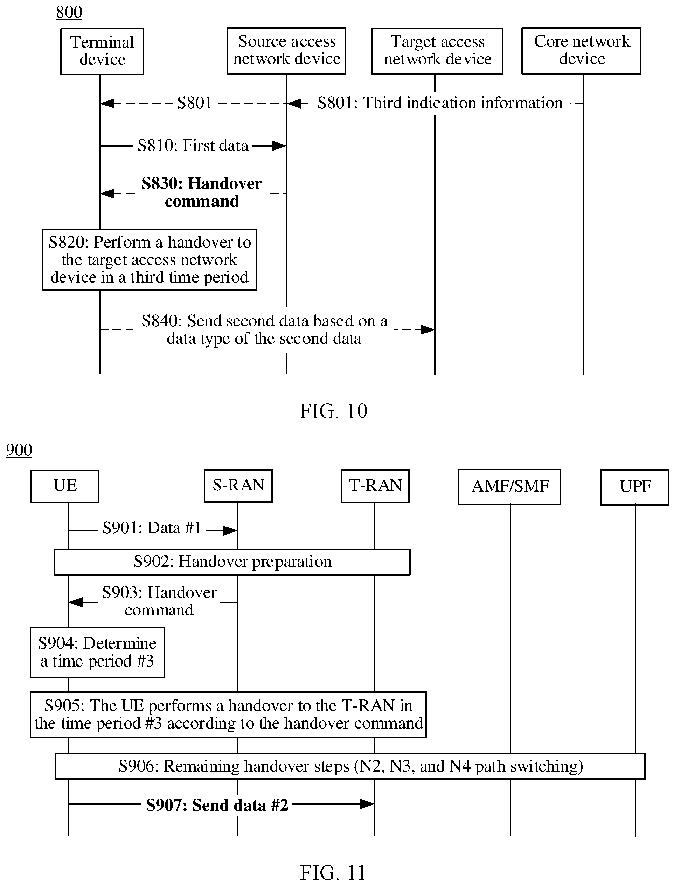

FIG. 10 is another schematic flowchart of a periodic service transmission method according to an embodiment of this application. It should be understood that the method 800 shown in FIG. 10 is applicable to transmission of an uplink periodic service.

S810: A terminal device sends first data to a source access network device. The first data is data in a first periodicity of a periodic service. Correspondingly, the source access network device receives the first data.

In this application, the periodic service may include a plurality of transmission periodicities. The first periodicity is one periodicity of the periodic service. The first data is the data in the first periodicity of the periodic service. Any one of the data 1, the data 2, and the data 3 in FIG. 2 may be used as an example of the first data. For a media service, the first data may be understood as a frame or a burst (burst) service.

S820: The terminal device performs a handover to a target access network device in a third time period. The third time period is determined based on a sending moment of a last data packet of the first data and duration of the first periodicity.

Optionally, after receiving a handover command, the terminal device determines the third time period based on the sending moment of the last data packet of the first data and the duration of the first periodicity, and performs a handover to the target access network device in the third time period. For example, the terminal device determines, based on the sending moment of the last data packet of the first data, that a start moment of the third time period is a moment at which the terminal device completes sending of the last data packet of the first data, and determines, based on the duration of the first periodicity, that an end moment of the third period is an end moment of the first periodicity. The duration of the first periodicity may also be understood as a transmission periodicity of the periodic service, that is, T in FIG. 2. The terminal device may perform a handover to the target access network device at any moment of the third time period. For example, any moment of the third time period may be the start moment of the third time period or the end moment of the third time period.

According to the solution in this embodiment of this application, when the terminal device needs to perform a handover from the source access network device to the target access network device, the terminal device may perform a handover to the target access network device at any moment of the third time period. The start moment of the third time period is a moment at which the terminal device completes sending of the last data packet, and the end moment of the third time period is the end moment of the first periodicity. In other words, according to the solution of this application, a handover of the terminal device may be performed in a time period in which the terminal device completes sending of the first data in the first periodicity, that is, the third time period. This avoids interruption of sending the first data by the terminal device due to the handover, and improves transmission reliability of a periodic service.

Optionally, the method 800 further includes: S830: The source access network device sends a handover command to the terminal device. The handover command instructs the terminal device to perform a handover to the target access network device. Correspondingly, the terminal device receives the handover command.

Specifically, the source access network device may determine an appropriate target base station based on a measurement report reported by the terminal device, and then indicate the terminal device to perform a handover to the target access network device.

It should be understood that in the method 800, after receiving the handover command, the terminal device does not immediately perform the handover, but performs a handover to the target access network device based on a sending status of the first data when sending of the first data is completed.

Optionally, the method 800 further includes: The terminal device determines the start moment of the third time period based on the sending moment of the last data packet, and determines the end moment of the third time period based on the duration of the first periodicity.

The terminal device may determine that a moment at which sending of the last data packet in the first data is completed is a start moment of a first time period.

The terminal device may determine, based on a moment at which the 1^{st} data packet of the first data is sent to the source access network device and the duration of the first periodicity, that the end moment of the first periodicity is an end moment of the first time period.

Optionally, the method 800 further includes: The terminal device obtains the duration of the first periodicity.

For example, the terminal device receives the duration of the first periodicity from an AMF. Specifically, when performing periodic service information exchange with the source access network device, the terminal device may obtain periodicity information that is of the periodic service and that is sent by a core network element. The periodicity information includes the duration of the first periodicity.

Optionally, the terminal device may determine the duration of the first periodicity according to a service transmission rule. In a period of time before the handover, the terminal device may autonomously identify the transmission periodicity of the periodic service, that is, the duration of the first periodicity. Alternatively, the terminal device may determine, based on an indication of an application layer of the terminal device, that the service is a periodic transmission service.

For example, the terminal device monitors a sending moment of a sent uplink service in a period of time, and determines that an interval between a moment at which data is sent each time and a moment at which data is sent last time in the period of time is fixed, to determine that the service is one periodic service, and a periodicity of the periodic service, that is, the duration of the first period, is the foregoing fixed time interval.

In an implementation, the method 800 further includes: S801: The terminal device receives third indication information. The third indication information indicates the terminal device to perform a handover to the target access network device in the third time period, indicates the terminal device to determine the start moment of the third time period, or indicates that the first data is data of the periodic service.

The terminal device may receive third indication information from a core network device. The third indication information indicates the terminal device to determine a handover moment in uplink periodic service transmission, and specifically includes determining the start moment of the third time period, or performing a handover to the target access network device in the third time period.

When the third indication information indicates that the first data is the data of the periodic service, the information may be used as an implicit indication. When learning that the first data is the data of the periodic service, the terminal device may autonomously determine the third time period when a handover is needed subsequently, and then perform a handover to the target access network device in the third time period. To be specific, when the source access network device indicates the terminal device to perform a handover to the target access network device, that "the first data is data of the periodic service" may be used as an additional trigger condition for the terminal device to determine the handover moment.

In other words, the third indication information may explicitly or implicitly indicate that the terminal device needs to perform optimization processing during the handover. Under an indication of the third indication information, the terminal device may perform the method 800 in this application.

The third indication information may be from the AMF. For example, the AMF may send the third indication information to the terminal device when a PDU session is established/modified. Alternatively, the AMF sends the third indication information to the terminal device by using the source access network device.

Optionally, the third indication information may include the duration of the first periodicity. In other words, the third indication information may include the transmission periodicity of the periodic service.

Optionally, after the terminal device performs a handover to the target access network device, the method 800 further includes: S840: The terminal device sends second data to the target access network device based on a data type of the second data. The second data is data in a second periodicity of the periodic service.

The terminal device may determine, based on the data type of the second data, whether to send the second data. The second data is the data in the second periodicity of the periodic service. A media service is used as an example. The data type of the second data includes but is not limited to one or more of the following: a frame type, a fragment type, a bit rate type, a viewing angle type, and the like. The frame type may be a data type such as an intra frame (I frame), a predicted frame (P frame), or a bi-directional predicted frame (B frame) in a video stream.

Specifically, the terminal device may identify the type of the service data by itself and determine a level of criticality or importance of the data. In other words, an upper-layer application layer of the terminal device can perceive the type of the service data, and notify a communication module of the type of the service data.

For example, the terminal device may determine, based on the frame type, whether the second data is a key frame. For a non-key frame, for example, if the second data is a frame that has small impact on decoding of another frame, such as a P frame or a B frame, the frame may be discarded, in other words, the second data is not sent to the target access network device. For a key frame, for example, if the second data is a frame that is critical for decoding another frame, such as an I frame, the key frame is sent, in other words, the second data is sent to the target access network device.

With reference to FIG. 11, the following describes a specific implementation of the periodic service transmission method 800 provided in this application. FIG. 11 is another schematic flowchart of a periodic service transmission method according to an embodiment of this application.

The method 900 shown in FIG. 11 may be performed by UE, an S-RAN (source RAN), a T-RAN (target RAN), an AMF, an SMF, or a UPF, or may be performed by a unit or module (for example, a circuit, a chip, or a system on a chip (system on a chip, SOC)) in UE, an S-RAN, a T-RAN, an AMF, an SMF, or a UPF. The following uses an example in which an execution body is the UE, the S-RAN, the T-RAN, the AMF, the SMF, or the UPF for description.

S901: The UE sends data #1 in a periodicity #1 of an uplink periodic service to the S-RAN. A transmission periodicity of the uplink periodic service is T, in other words, duration of the periodicity #1 is T.

S902: The UE, the S-RAN, and the T-RAN perform a handover preparation process.

In a process in which the UE sends data to the S-RAN, the S-RAN may determine, based on a measurement report of the UE, to hand over the UE to the T-RAN. The handover preparation process includes but is not limited to the following process: The S-RAN configures measurement control and reporting for the UE, the UE reports measurement results of a plurality of nearby RANs, and the S-RAN makes a handover decision based on the reported measurement results and determines a proper RAN as a T-RAN for a handover. The S-RAN sends a handover request (handover request) message to the T-RAN. The T-RAN performs access control on the UE and determines whether the UE can access the T-RAN. After completing access control, the T-RAN sends a handover request acknowledgment (handover request ACK) message.

S903: The S-RAN sends a handover command (HO cmd) to the UE, and correspondingly, the UE receives the handover command.

S904: The UE determines a time period #3 based on a sending moment of a last data packet of data #1 and the transmission periodicity T of the periodic service.

Specifically, the UE may determine that the sending moment of the last data packet of the data #1 is a start moment of the time period #3, and determine, based on a moment at which the 1^{st} data packet of the data #1 is sent and the periodicity T, that an end moment of the periodicity #1 in which the data #1 is located is an end moment of the time period #3.

S905: The UE performs a handover to the T-RAN in the time period #3 according to the handover command. Specifically, the UE disconnects from the S-RAN, and establishes a connection to the T-RAN.

It should be understood that the UE has sent the data #1 before performing the handover procedure.

S906: The UE, the S-RAN, the T-RAN, the AMF, the SMF, the UPF, and the like may complete remaining handover steps based on an existing standard procedure, including steps such as N2, N3, and N4 path switching (path switch).

S907: After the UE performs a handover to the T-RAN, the UE sends one or more pieces of data #2 to the T-RAN. The UE may further discard the data #2 based on a data type of the data #2.

According to the solution in this embodiment of this application, when the terminal device needs to perform a handover from the source access network device to the target access network device, the terminal device may determine the third time period based on the sending moment of the last data packet of the first data and the duration of the first periodicity. A start moment of the third time period is a moment at which the terminal device completes sending of the last data packet of the first data, and an end moment of the third time period is an end moment of the first periodicity. The terminal device may perform a handover to the target access network device in the third time period. In other words, according to the solution of this application, a handover of the terminal device may be performed at time at which sending of the first data is completed in the first periodicity. This avoids an interruption problem of sending the first data by the terminal device in a handover process, and improves transmission reliability of the periodic service.

The foregoing describes, with reference to FIG. 3 to FIG. 11, specific implementations of the periodic service transmission method provided in this application. The following describes delivery of information related to periodic service transmission (including the periodicity information, the indication information, and the like mentioned above).

In this embodiment of this application, an application server may provide, for a network side through capability exposure, information related to periodic service transmission, so that the network side can monitor a periodic service corresponding to the information, and can perform an optimization processing operation during the handover. The optimization processing operation includes but is not limited to the foregoing determining a handover moment, indicating an access network device to determine a send priority of data after the handover, determining a moment for sending the fourth identifier, and the like.

The information related to periodic service transmission may include indication information, periodicity information, traffic description (traffic description) information, and the like.
(1) The indication information may indicate each core network device to perform the optimization processing operation on the periodic service. Specifically, the information may include generating and delivering one or more of the first indication information, the second indication information, the third indication information, the fourth indication information, the fifth indication information, and the sixth indication information, so that the UE, the S-RAN, and/or the UPF can perform the optimization processing operation on the periodic service during the handover.
(2) The periodicity information is mainly the transmission periodicity of the periodic service, and the periodicity information may be separately sent, or may be explicitly or implicitly indicated by using the foregoing indication information.

Optionally, the indication information may alternatively be implicitly indicated by using the periodicity information. In other words, the periodicity information may alternatively be used as one type of indication information.

It should be understood that the periodicity information may include a transmission periodicity of an uplink periodic service, or may include a transmission periodicity of a downlink periodic service. Alternatively, the periodicity information may include both a transmission periodicity of an uplink periodic service and a transmission periodicity of a downlink periodic service.

(3) Traffic description information is used to assist the network side in locating and identifying a corresponding service flow. Optionally, the traffic description information may include a method for identifying a periodic service flow, including a method for identifying a periodic service, a method for identifying an identifier of a periodic data flow, and the like.

Specifically, a process of delivering the information related to periodic service transmission may include one or more of the following procedures mentioned above:
(1) In the method 100, the source access network device receives the duration of the first periodicity from the SMF or the NWDAD, and the source access network device receives the first indication information from the core network device. The first indication information indicates the source access network device to send the handover command to the terminal device in the first time period, indicates the source access network device to determine the start moment of the first time period based on the first identifier, or indicates that the first data is data of the periodic service.
(2) In the method 500, the source access network device receives the duration of the first periodicity from the SMF or the NWDAD, and the source access network device receives the second indication information from the core network device. The second indication information indicates the source access network device to send the handover command to the terminal device in the second time period, indicates the source access network device to determine the start moment of the second time period, or indicates that the first data is data of the periodic service.
(3) In the method 800, the terminal device may receive the duration of the first periodicity from a core network element such as the AMF, or the source access network device, and the terminal device receives the third indication information from the core network device. The third indication information indicates the terminal device to perform a handover to the target access network device in the third time period, indicates the terminal device to determine the start moment of the third time period, or indicates that the first data is data of the periodic service.
(4) The UPF receives the fourth indication information from the core network device, and then may send the fourth indication information to the source access network device and/or the target access network device in the method 200 and the method 300, so that the target access network device can obtain the fourth indication information. The fourth information indicates the target access network device to determine the send priority of the second data and/or the send priority of the third data.
(5) In the method 300, the UPF receives the duration of the first periodicity from the SMF or the NWDAD, and the UPF receives the fifth indication information from the core network device. The fifth indication information indicates the UPF to send the fourth identifier to the source access network device in the fourth time period, indicates the UPF to determine the fourth time period, or indicates that the second data is data of the periodic service.
(6) In the method 500, the terminal device receives the sixth indication information from the core network device by using the source access network device. The sixth indication information indicates the terminal device to send the first information.

In some implementations, the information related to periodic service transmission may be delivered to the UE, the S-RAN, and/or the UPF by using a protocol data unit (protocol data unit, PDU) session establishment procedure or a PDU session modification procedure.

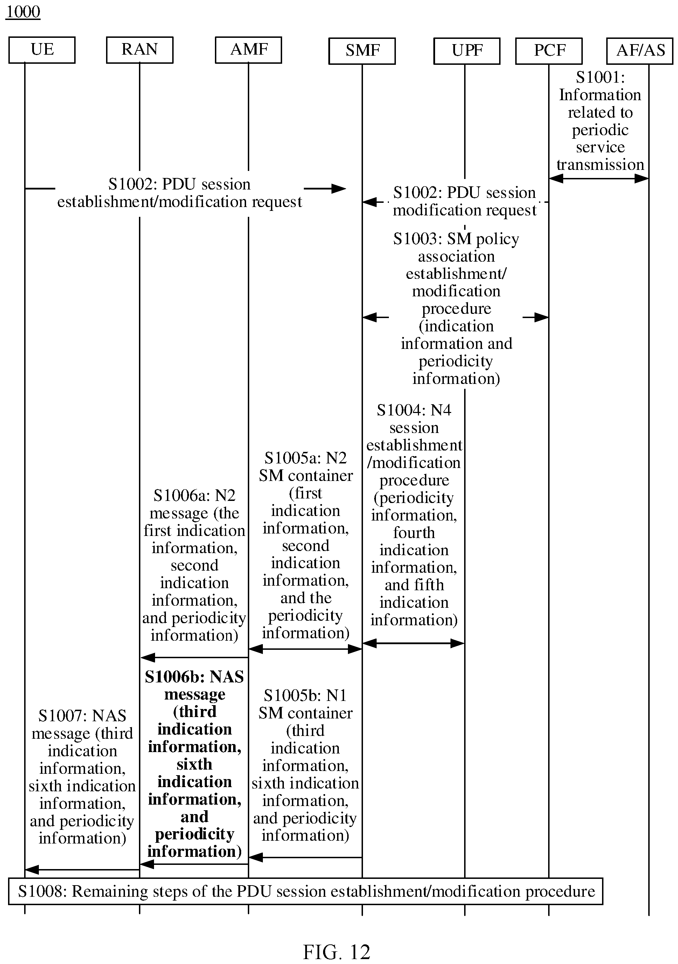

FIG. 12 is a schematic flowchart of information that is delivered by an application server and that is related to periodic service transmission according to an embodiment of this application. A method 1000 in FIG. 12 includes the following steps.

S1001: An AF or an AS sends information related to periodic service transmission to a PCF. Correspondingly, the PCF receives the information related to periodic service transmission from the AF or the AS.

Optionally, the AF or the AS may notify a PCF side of the information related to periodic service transmission and traffic description information by using an AF request (AF request) message. Specifically, the AF may modify information in a unified data repository (unified data repository, UDR) by using the AF request message, and then an update of the information in the UDR triggers a notification to the PCF, so that the corresponding information is sent to the PCF side.

The PCF may generate a corresponding policy control and charging (policy control and charging, PCC) rule based on the traffic description information, for example, quintuple information of a corresponding periodic service flow, to detect the corresponding periodic service flow, including detecting that the data is data of the periodic service and being able to identify/generate a corresponding identifier. Specifically, the detection rule may include a detailed rule for performing data detection by the UPF. For example, if the application server adds, at a network/transmission/application layer or another layer of data, identification information used to identify a data type or periodicity of a data packet, the detection rule carries a detection rule of the foregoing identification information, for example, detecting one field (such as the 9^{th} bit to the 16^{th} bit) of a data packet.

For example, the detection rule may indicate how to identify a first identifier, a second identifier, and/or a third identifier.

Then, when UE initiates a PDU session establishment procedure or a PDU session modification procedure, the PCF may deliver the foregoing information related to periodic service transmission to an S-RAN and/or a UPF by using the PDU session establishment procedure or the PDU session modification procedure.

S1002: The UE sends a PDU session establishment request message or a PDU session modification request message to an SMF by using an AMF. Correspondingly, the SMF receives the PDU session establishment request message or the PDU session modification request message from the UE.

It should be understood that, in S1002, in addition to the PDU session establishment/modification procedure initiated by a UE side, the PDU session modification procedure may alternatively be initiated by the PCF or the SMF. An establishment procedure is an establishment procedure initiated by the UE side, and a modification procedure may be a PDU session modification procedure initiated by the UE side or a PDU session modification procedure initiated by a PCF/SMF side.

S1003: After receiving the PDU session establishment request message or the PDU session modification request message, the SMF initiates a session management (session management, SM) policy association establishment (session management policy association establishment) procedure or an SM policy association modification (session management policy association modification) procedure to the PCF.

In the session management policy association establishment procedure or a session management policy association modification procedure, the PCF may send the indication information, the periodicity information, a corresponding policy control and charging (policy control and charging, PCC) rule, and the like to the SMF.

After receiving the indication information, the periodicity information, the PCC rule, and the like, the SMF may determine periodicity information of a corresponding service based on the previously obtained periodicity information, and generate a corresponding QoS parameter based on the PCC rule, for example, a packet detection rule (packet detection rule, PDR) sent to a UPF side or a QoS rule sent to the UE side. Then, the SMF may send the QoS parameter and the corresponding indication information and/or periodicity information to another network element (for example, a RAN, the UPF, or the UE) based on the received indication information. The SMF may generate one or more of first indication information, second indication information, third indication information, fourth indication information, fifth indication information, and sixth indication information based on the indication information. Optionally, the periodicity information may alternatively implicitly indicate the SMF to generate and deliver the foregoing indication information.

In some implementations, the SMF may send the periodicity information and the indication information to the UPF, to indicate the UPF to perform an optimization processing operation during a handover.

For example, as shown in S1004, the SMF may send the corresponding packet detection rule (packet detection rule, PDR), the fourth indication information, the fifth indication information, and the periodicity information to the UPF side by using an N4 session establishment procedure or an N4 session modification procedure.

Optionally, if the UPF performs service shaping, to be specific, the UPF performs traffic shaping on downlink data, to ensure a strict periodicity of the downlink data, in S1004, the UPF may send periodicity information obtained through shaping to the SMF in the N4 session establishment/modification process. Optionally, the periodicity information may alternatively be obtained through analyzing service information by the NWDAF. This is not limited in this application. In this case, information sent by the SMF to the UPF may not include the periodicity information. Step S1004 is an implementation of S230 mentioned above.

In some implementations, the SMF may send the periodicity information and the indication information to the S-RAN, to indicate the S-RAN to perform the optimization processing operation during the handover.

For example, as shown in S1005a and S1006a, the SMF may send at least one of the first indication information, the second indication information, and the periodicity information to the S-RAN by using the AMF.

S 1005a: The SMF may send at least one of the first indication information, the second indication information, and the periodicity information to the AMF. For example, the SMF may send at least one of the first indication information, the second indication information, and the periodicity information to the AMF by using an N2 SM container (container).

S1006a: The AMF may send at least one of the first indication information, the second indication information, and the periodicity information to the S-RAN. For example, the AMF may send at least one of the first indication information, the second indication information, and the periodicity information to the S-RAN by using an N2 message. Steps S1005a and S1006a are implementations of S101 and S501.

The S-RAN may store the first indication information and the periodicity information as a UE context, and perform the optimization processing operation during the handover.

In some implementations, the SMF may send the periodicity information and the indication information to the UE, and indicate the UE to perform the optimization processing operation during the handover.

For example, as shown in S1005b and S1006b, the SMF may send at least one of the third indication information, the sixth indication information, and the periodicity information to the UE by using the AMF.

S1005b: The SMF may send at least one of the third indication information, the sixth indication information, and the periodicity information to the AMF. For example, the SMF may send at least one of the third indication information, the sixth indication information, and the periodicity information to the AMF by using an N1 SM container (container).

S1006b: The AMF may send at least one of the third indication information, the sixth indication information, and the periodicity information to the S-RAN. For example, the AMF may send at least one of the third indication information, the sixth indication information, and the periodicity information to the S-RAN by using a NAS message.

S1007: The S-RAN may send at least one of the third indication information, the sixth indication information, and the periodicity information to the UE. For example, the S-RAN may send a NAS message from the AMF to the UE side. The NAS message includes at least one of the third indication information, the sixth indication information, and the periodicity information. Steps S1005b, S1006b, and S1007 are implementations of S502 and S801.

S1008: Each network element completes a remaining PDU session establishment procedure or PDU session modification procedure. For details, refer to sections 4.3.2.2.1 and 4.3.3 in the standard TS 23.502.

It should be noted that, for different periodic services and different technical solutions, information sent by the SMF to the S-RAN, the UPF, and the UE may be different. For example, for a downlink periodic service, when the S-RAN determines a handover moment, the second indication information and a transmission periodicity of an uplink periodic service may not be sent to the S-RAN, and the sixth indication information, the third indication information, and the transmission periodicity of the uplink periodic service may not be sent to the UE. For another example, for an uplink periodic service, when the S-RAN determines the handover moment, the first indication information and a transmission periodicity of a downlink periodic service may not be sent to the S-RAN, the fifth indication information and the transmission periodicity of the downlink periodic service may not be sent to the UPF, and the third indication information and the transmission periodicity of the downlink periodic service may not be sent to the UE. For still another example, for the uplink periodic service, when the UE determines the handover moment, the first indication information, the second indication information, and the transmission periodicity of the downlink periodic service may not be sent to the S-RAN, the fifth indication information and the transmission periodicity of the downlink periodic service may not be sent to the UPF, and the sixth indication information and the transmission periodicity of the downlink periodic service may not be sent to the UE. In other words, for different periodic services and different technical solutions, the SMF may send or skip sending some or all of the foregoing information related to periodic service transmission to the S-RAN, the UPF, and the UE.

According to the foregoing technical solution, the application server can notify the S-RAN and a core network device of the information related to periodic service transmission by using a network capability exposure interface and a PDU session establishment or modification procedure, so that corresponding information can be provided for a current PDU session or a future PDU session, to ensure that an optimization operation can be performed for a corresponding periodic service during the handover.

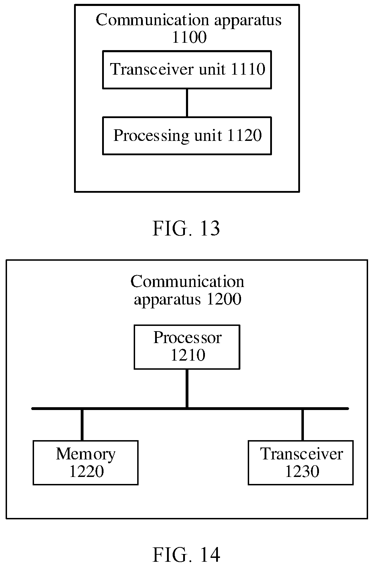

The following describes a communication apparatus provided in this application with reference to FIG. 13 and FIG. 14.

FIG. 13 is a schematic block diagram of a communication apparatus according to this application. As shown in FIG. 13, a communication apparatus 1100 may include a transceiver unit 1110 and/or a processing unit 1120.

The transceiver unit 1110 may include a sending unit and/or a receiving unit. The transceiver unit 1110 may be a transceiver (including a transmitter and/or a receiver), an input/output interface (including an input interface and/or an output interface), a pin, a circuit, or the like. The transceiver unit 1110 may be configured to perform the sending and/or receiving steps in the foregoing method embodiments.

The processing unit 1120 may be a processor (which may include one or more processors), a processing circuit having a processor function, or the like, and may be configured to perform another step other than the sending and receiving steps in the foregoing method embodiments.

Optionally, the communication apparatus may further include a storage unit. The storage unit may be a memory, an internal storage unit (for example, a register or a cache), an external storage unit (for example, a read-only memory or a random-access memory), or the like. The storage unit is configured to store instructions, and the processing unit 1120 executes the instructions stored in the storage unit, to enable the communication apparatus to perform the foregoing methods.

In a design, the communication apparatus 1100 may correspond to the source access network device in the method 100, the method 200, the method 300, the method 400, and the method 1000, and may perform operations performed by the source access network device and the S-RAN in the method 100, the method 200, the method 300, the method 400, and the method 1000.

For example, the transceiver unit 1110 is configured to receive first data and a first identifier. The first identifier indicates a last data packet of the first data, and the first data is data in a first periodicity of a periodic service. The transceiver unit 1110 may be further configured to send the last data packet to a terminal device. The transceiver unit 1110 may be further configured to send a handover command to the terminal device in a first time period. A start moment of the first time period is a moment at which the last data packet is sent, an end moment of the first time period is an end moment of the first periodicity, and the handover command instructs the terminal device to perform a handover to a target access network device.

It should be understood that the transceiver unit 1110 and the processing unit 1120 may further perform other operations performed by the source access network device and the S-RAN in any one of the method 100, the method 200, the method 300, the method 400, and the method 1000. Details are not described herein again.

In a design, the communication apparatus 1100 may correspond to the source access network device in the method 500, the method 600, and the method 1000, and may perform operations performed by the source access network device and the S-RAN in the method 500, the method 600, and the method 1000.

For example, the transceiver unit 1110 is configured to receive first data and first information from the terminal device. The first information is used to determine transmission duration of the first data, and the first data is the data in the first periodicity of the periodic service. The transceiver unit 1110 may be further configured to send a handover command to the terminal device in a second time period. The second time period is determined based on a receiving moment of the 1^{st} data packet of the first data, the transmission duration, and duration of the first periodicity, and the handover command instructs the terminal device to perform a handover to the target access network device.

It should be understood that the transceiver unit 1110 and the processing unit 1120 may further perform other operations performed by the source access network device and the S-RAN in the method 500, the method 600, and the method 1000. Details are not described herein again.

In a design, the communication apparatus 1100 may correspond to the terminal device in the method 500, the method 600, and the method 1000, and may perform operations performed by the terminal device and the UE in the method 500, the method 600, and the method 1000.

For example, the transceiver unit 1110 is configured to send the first data and the first information to the source access network device. The first information is used to determine the transmission duration of the first data, and the first data is the data in the first periodicity of the periodic service. The transceiver unit 1110 may be further configured to receive a handover command from the source access network device. The handover command instructs the terminal device to perform a handover to the target access network device. The processing unit 1120 is configured to perform a handover to the target access network device according to the handover command.

It should be understood that the transceiver unit 1110 and the processing unit 1120 may further perform other operations performed by the terminal device and the UE in the method 500, the method 600, and the method 1000. Details are not described herein again.

In a design, the communication apparatus 1100 may correspond to the terminal device in the method 800, the method 900, and the method 1000, and may perform operations performed by the terminal device and the UE in the method 800, the method 900, and the method 1000.

For example, the transceiver unit 1110 is configured to send the first data to the source access network device. The first data is the data in the first periodicity of the periodic service. The transceiver unit 1110 may be further configured to receive the handover command from the source access network device. The handover command instructs the terminal device to perform a handover to the target access network device. The processing unit 1120 is configured to perform a handover to the target access network device in a third time period. The third time period is determined based on a sending moment of the last data packet of the first data and the duration of the first periodicity.

It should be understood that the transceiver unit 1110 and the processing unit 1120 may further perform other operations performed by the terminal device and the UE in the method 800, the method 800, and the method 1000. Details are not described herein again.

In a design, the communication apparatus 1100 may correspond to the target access network device in the method 100, the method 200, the method 300, the method 400, and the method 1000, and may perform operations performed by the target access network device and the T-RAN in the method 100, the method 200, the method 300, the method 400, and the method 1000.

For example, the transceiver unit 1110 is configured to receive second data from the source access network device and/or third data from a user plane function network element. The second data is data in a second periodicity of the periodic service, and the third data is data in a third periodicity of the periodic service. The processing unit 1120 is configured to determine a send priority of the second data and/or a send priority of the third data. The determining a send priority of the second data and/or a send priority of the third data includes at least one of the following: determining, based on a data type of the second data, whether to send the second data, determining whether to perform accelerated processing on the second data, determining a sending time sequence of the second data based on a second identifier, determining, based on a data type of the third data, whether to send the third data, determining whether to perform the accelerated processing on the third data, determining a sending time sequence of the third data based on a third identifier, and determining a sending time sequence of the second data and the third data.

It should be understood that the transceiver unit 1110 and the processing unit 1120 may further perform other operations performed by the target access network device and the T-RAN in the method 100, the method 200, the method 300, the method 400, and the method 1000. Details are not described herein again.

In a design, the communication apparatus 1100 may correspond to the user plane network element and the UPF in the method 100, the method 200, the method 300, the method 400, and the method 1000, and may perform operations performed by the user plane network element and the UPF in the method 100, the method 200, the method 300, the method 400, and the method 1000.

For example, the transceiver unit 1110 is configured to receive seventh indication information from the target access network device. The seventh indication information indicates the terminal device to perform a handover to the target access network device. The transceiver unit 1110 may be further configured to send a fourth identifier to the source access network device in a fourth time period. The fourth identifier indicates that the second data is a last piece of data sent by the user plane function network element to the source access network device, the second data is the data in the second periodicity of the periodic service, a start moment of the fourth time period is a moment at which a last data packet of the second data is sent, and an end moment of the fourth time period is an end moment of the second periodicity.

It should be understood that the transceiver unit 1110 and the processing unit 1120 may further perform other operations performed by the user plane network element and the UPF in the method 100, the method 200, the method 300, the method 400, and the method 1000. Details are not described herein again.

In a design, the communication apparatus 800 may correspond to the SMF in any one of the foregoing methods, and may perform an operation performed by the SMF in the corresponding method.

For example, the transceiver unit 1110 is configured to: send fifth indication information and periodicity information to the UPF, send at least one of first indication information, second indication information, and the periodicity information to the S-RAN, and send at least one of third indication information, sixth indication information, and the periodicity information to the UE.

It should be understood that the transceiver unit 1110 and the processing unit 1120 may further perform other operations performed by the SMF in the method 500, the method 600, and the method 1000. Details are not described herein again.

FIG. 14 is a block diagram of a structure of a communication apparatus 1200 according to an embodiment of this application. As shown in FIG. 14, the communication apparatus 1200 includes a processor 1210, a memory 1220, and a transceiver 1230. The processor 1210 is coupled to the memory 1220, and is configured to execute instruction stored in the memory 1220, to control the transceiver 1230 to send a signal and/or receive a signal.

It should be understood that the processor 1210 and the memory 1220 may be integrated into one processing apparatus. The processor 1210 is configured to execute program code stored in the memory 1220 to implement the foregoing functions. During specific implementation, the memory 1220 may alternatively be integrated into the processor 1210, or may be independent of the processor 1210. It should be understood that the processor 1210 may alternatively correspond to each processing unit in the foregoing communication apparatus, and the transceiver 1230 may correspond to each receiving unit and each sending unit in the foregoing communication apparatus.

It should be further understood that the transceiver 1230 may include a receiver (or referred to as a receive machine) and a transmitter (or referred to as a transmit machine). The transceiver may further include an antenna. There may be one or more antennas. Alternatively, the transceiver may be a communication interface or an interface circuit.

Specifically, the communication apparatus 1200 may correspond to the source access network device in the method 100, the method 200, the method 300, the method 400, and the method 1000, the target access network device in the method 100, the method 200, the method 300, the method 400, and the method 1000, the user plane function network element in the method 100, the method 200, the method 300, the method 400, and the method 1000, the source access network device in the method 500, the method 600, and the method 1000, the terminal device in the method 500, the method 600, and the method 1000, or the terminal device in the method 800, the method 900, and the method 1000 according to embodiments of this application. The communication apparatus 1200 may include a unit of a method performed by the source access network device in the methods 300, 400, and 1000, a unit of a method performed by the target access network device in the method 100, the method 200, the method 300, the method 400, and the method 1000, a unit of a method performed by the user plane function network element in the method 100, the method 200, the method 300, the method 400, and the method 1000, a unit of a method performed by the source access network device in the methods 500, 600, and 1000, a unit of a method performed by the terminal device in the methods 500, 600, and 1000, a unit of a method performed by the source access network device in the methods 500, 600, and 1000, or a unit of a method performed by the terminal device in the methods 800, 900, and 1000. It should be understood that a specific process in which the units perform the foregoing corresponding steps is described in detail in the foregoing method embodiments. For brevity, details are not described herein.

When the communication apparatus 1200 is a chip, the chip includes a transceiver unit and a processing unit. The transceiver unit may be an input/output circuit or a communication interface. The processing unit may be a processor, a microprocessor, or an integrated circuit that is integrated on the chip.

In an implementation process, the steps of the foregoing methods may be implemented by using a hardware integrated logical circuit in the processor, or by using instructions in a form of software. The steps of the method disclosed with reference to embodiments of this application may be directly executed and accomplished by using a hardware processor, or may be executed and accomplished by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, the steps in the foregoing method embodiments may be implemented by using a hardware integrated logical circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general purpose processor may be a microprocessor, or the processor may be any conventional processor or the like. The steps of the method disclosed with reference to embodiments of this application may be directly executed and accomplished by using a hardware decoding processor, or may be executed and accomplished by using a combination of hardware and software modules in a decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

According to the method provided in embodiments of this application, this application further provides a computer program product. The computer program product includes computer program code. When the computer program code is run on a computer, the computer is enabled to perform the method according to any one of the embodiments shown in FIG. 3 to FIG. 12.

According to the method provided in embodiments of this application, this application further provides a computer-readable medium. The computer-readable medium stores program code. When the program code is run on a computer, the computer is enabled to perform the method according to any one of the embodiments shown in FIG. 3 to FIG. 12.

According to the method provided in embodiments of this application, this application further provides a system, including the source access network device, the target access network device, and/or the user plane function network element in any one of the embodiments shown in FIG. 3 to FIG. 6.

Terms such as "component", "module", and "system" used in this specification indicate computer-related entities, hardware, firmware, combinations of hardware and software, software, or software being executed. For example, a component may be, but is not limited to, a process that is run on a processor, a processor, an object, an executable file, an execution thread, a program, and/or a computer. As illustrated by using figures, both an application running on a computing device and the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, in a distributed system, and/or across a network such as the internet interacting with another system by using a signal).

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A periodic service transmission method, wherein the method is performed by a source access network device and comprises:
receiving first data and a first identifier, wherein the first identifier indicates a last data packet of the first data, and the first data is data in a first periodicity of a periodic service; and
sending a handover command to a terminal device in a first time period, wherein a start moment of the first time period is a moment at which the last data packet is sent to the terminal device, an end moment of the first time period is an end moment of the first periodicity, and the handover command instructs the terminal device to perform a handover to a target access network device.

2. The method according to claim 1, wherein the method further comprises:
determining the start moment of the first time period based on the first identifier.

3. The method according to claim 1 or 2, wherein the method further comprises:
obtaining duration of the first periodicity; and
determining the end moment of the first periodicity based on the duration of the first periodicity.

4. The method according to any one of claims 1 to 3, wherein the receiving a first identifier comprises:
receiving the first identifier from a user plane function network element by using a general packet radio service tunneling protocol GTP layer.

5. The method according to any one of claims 1 to 4, wherein the method further comprises:
receiving first indication information, wherein the first indication information indicates the source access network device to send the handover command to the terminal device in the first time period, indicates the source access network device to determine the start moment of the first time period based on the first identifier, or indicates that the first data is data of the periodic service.

6. The method according to claim 5, wherein the first indication information comprises the duration of the first periodicity.

7. The method according to claim 5 or 6, wherein the method further comprises:
sending the first indication information to the target access network device.

8. A periodic service transmission method, wherein the method is performed by a source access network device and comprises:
receiving first data and first information from a terminal device, wherein the first information is used to determine transmission duration of the first data, and the first data is data in a first periodicity of a periodic service; and
sending a handover command to the terminal device in a second time period, wherein the second time period is determined based on a receiving moment of the 1^{st} data packet of the first data, the transmission duration, and duration of the first periodicity, and the handover command instructs the terminal device to perform a handover to a target access network device.

9. The method according to claim 8, wherein the method further comprises:
determining a start moment of the second time period based on the receiving moment of the 1^{st} data packet of the first data and the transmission duration.

10. The method according to claim 8 or 9, wherein the method further comprises:
obtaining the duration of the first periodicity; and
determining an end moment of the second time period based on the receiving moment of the 1^{st} data packet and the duration of the first periodicity.

11. The method according to any one of claims 8 to 10, wherein the method further comprises:
receiving second indication information, wherein the second indication information indicates the source access network device to send the handover command to the terminal device in the second time period, indicates the source access network device to determine the start moment of the second time period, or indicates that the first data is data of the periodic service.

12. The method according to claim 11, wherein the second indication information comprises the duration of the first periodicity.

13. The method according to any one of claims 8 to 12, wherein the receiving first information from a terminal device comprises:
receiving the first information from the terminal device by using a packet data convergence protocol PDCP layer or a service data adaptation protocol SDAP layer.

14. A periodic service transmission method, wherein the method is performed by a terminal device and comprises:
sending first data to a source access network device, wherein the first data is data in a first periodicity of a periodic service; and
performing a handover to a target access network device in a third time period, wherein the third time period is determined based on a sending moment of a last data packet of the first data and duration of the first periodicity.

15. The method according to claim 14, wherein the method further comprises:
determining a start moment of the third time period based on the sending moment of the last data packet; and
determining an end moment of the third time period based on the duration of the first periodicity.

16. The method according to claim 14 or 15, wherein the method further comprises:
receiving third indication information, wherein the third indication information indicates the terminal device to perform a handover to the target access network device in the third time period, indicates the terminal device to determine the start moment of the third time period, or indicates that the first data is data of the periodic service.

17. The method according to claim 16, wherein the third indication information comprises the duration of the first periodicity.

18. The method according to any one of claims 14 to 17, wherein the method further comprises:
determining, based on a type of second data, whether to send the second data, wherein the type of the second data comprises one or more of the following: a frame type, a fragment type, a bit rate type, and a viewing angle type, and the second data is data in a second periodicity of the periodic service.

19. A communication apparatus, comprising:
a transceiver unit, configured to receive first data and a first identifier, wherein the first identifier indicates a last data packet of the first data, and the first data is data in a first periodicity of a periodic service, wherein
the transceiver unit is further configured to send a handover command to a terminal device in a first time period, wherein a start moment of the first time period is a moment at which the last data packet is sent to the terminal device, an end moment of the first time period is an end moment of the first periodicity, and the handover command instructs the terminal device to perform a handover to a target access network device.

20. The apparatus according to claim 19, wherein the apparatus further comprises:
a processing unit, configured to determine the start moment of the first time period based on the first identifier.

21. The apparatus according to claim 19 or 20, wherein
the transceiver unit is further configured to obtain duration of the first periodicity; and
the processing unit is further configured to determine the end moment of the first periodicity based on the duration of the first periodicity.

22. The apparatus according to any one of claims 19 to 21, wherein the transceiver unit is further configured to:
receive first indication information, wherein the first indication information indicates the apparatus to send the handover command to the terminal device in the first time period, indicates the apparatus to determine the start moment of the first time period based on the first identifier, or indicates that the first data is data of the periodic service.

23. A communication apparatus, comprising:
a transceiver unit, configured to receive first data and first information from a terminal device, wherein the first information is used to determine transmission duration of the first data, and the first data is data in a first periodicity of a periodic service, wherein
the transceiver unit is further configured to send a handover command to the terminal device in a second time period, wherein the second time period is determined based on a receiving moment of the 1^{st} data packet of the first data, the transmission duration, and duration of the first periodicity, and the handover command instructs the terminal device to perform a handover to a target access network device.

24. The apparatus according to claim 23, wherein the apparatus further comprises:
a processing unit, configured to determine a start moment of the second time period based on the receiving moment of the 1^{st} data packet of the first data and the transmission duration.

25. The apparatus according to claim 23 or 24, wherein
the transceiver unit is further configured to obtain the duration of the first periodicity; and
the processing unit is further configured to determine an end moment of the second time period based on the receiving moment of the 1 ^{st} data packet and the duration of the first periodicity.

26. The apparatus according to any one of claims 23 to 25, wherein the transceiver unit is further configured to:
receive second indication information, wherein the second indication information indicates the apparatus to send the handover command to the terminal device in the second time period, indicates the apparatus to determine the start moment of the second time period, or indicates that the first data is data of the periodic service.

27. A communication apparatus, comprising:
a transceiver unit, configured to send first data to a source access network device, wherein the first data is data in a first periodicity of a periodic service; and
a processing unit, configured to perform a handover to a target access network device in a third time period, wherein the third time period is determined based on a sending moment of a last data packet of the first data and duration of the first periodicity.

28. The apparatus according to claim 27, wherein the processing unit is further configured to:
determine a start moment of the third time period based on the sending moment of the last data packet; and
determine an end moment of the third time period based on the duration of the first periodicity.

29. The apparatus according to claim 27 or 28, wherein the transceiver unit is further configured to:
receive third indication information, wherein the third indication information indicates the apparatus to perform a handover to the target access network device in the third time period, indicates the apparatus to determine the start moment of the third time period, or indicates that the first data is data of the periodic service.

30. A computer-readable storage medium, wherein the computer-readable storage medium stores a computer program or instructions, and when the computer program or instructions are run on a computer, the computer is enabled to perform the method according to any one of claims 1 to 7, the method according to any one of claims 8 to 13, or the method according to any one of claims 14 to 18.
